(19) Europäisches Patentamt
European Patent Office
Office européen des brevets

(11) **EP 3 850 776 B1**

(12) **EUROPEAN PATENT SPECIFICATION**

(45) Date of publication and mention
of the grant of the patent:
**14.08.2024 Bulletin 2024/33**

(21) Application number: **19861078.4**

(22) Date of filing: **12.09.2019**

(51) International Patent Classification (IPC):
*H04L 5/00* (2006.01)       *H04W 72/04* (2023.01)
*H04B 7/06* (2006.01)

(52) Cooperative Patent Classification (CPC):
**H04L 5/0051; H04B 7/0404; H04B 7/0695;**
**H04L 5/0053; H04L 5/0094**

(86) International application number:
**PCT/US2019/050878**

(87) International publication number:
**WO 2020/056180 (19.03.2020 Gazette 2020/12)**

(54) **DEVICE AND METHOD FOR SOUNDING REFERENCE SIGNAL TRIGGERING AND CONFIGURATION IN A NEW RADIO NETWORK**

VORRICHTUNG UND VERFAHREN ZUR AUSLÖSUNG UND KONFIGURATION VON SOUNDING-REFERENZSIGNALEN IN EINEM NEW-RADIO-NETZ

DISPOSITIF ET PROCÉDÉ DE DÉCLENCHEMENT ET DE CONFIGURATION DE SIGNAL DE RÉFÉRENCE DE SONDAGE DANS UN RÉSEAU NEW RADIO

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **12.09.2018 PCT/CN2018/105276**
**19.10.2018 US 201862748054 P**

(43) Date of publication of application:
**21.07.2021 Bulletin 2021/29**

(60) Divisional application:
**24162476.6 / 4 366 189**

(73) Proprietor: **Intel Corporation**
**Santa Clara, CA 95054-1549 (US)**

(72) Inventors:
• **XIONG, Gang**
**Portland, OR 97229 (US)**
• **ZHANG, Yushu**
**Beijing, Haidian 100190 (CN)**
• **YU, Zhibin**
**82008 Unterhaching (DE)**

(74) Representative: **HGF**
**HGF Limited**
**1 City Walk**
**Leeds LS11 9DX (GB)**

(56) References cited:
**WO-A1-2017/146759**

• **ERICSSON: "Feature lead summary 3 on beam measurement and reporting", vol. RAN WG1, no. Athens, Greece; 20180226 - 20180302, 1 March 2018 (2018-03-01), XP051398639, Retrieved from the Internet <URL:http://www.3gpp.org/ftp/tsg%5Fran/WG1%5FRL1/TSGR1%5F92/Docs/> [retrieved on 20180301]**
• **"3rd Generation Partnership Project; Technical Specification Group Radio Access Network; NR; Physical layer procedures for data (Release 15)", 3GPP STANDARD; TECHNICAL SPECIFICATION; 3GPP TS 38.214, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V15.1.0, 9 April 2018 (2018-04-09), pages 1 - 77, XP051451093**

- ERICSSON: "Feature lead summary 1 for beam measurement and reporting", vol. RAN WG1, no. Busan; 20180521 - 20180525, 24 May 2018 (2018-05-24), XP051463264, Retrieved from the Internet <URL:http://www.3gpp.org/ftp/tsg%5Fran/WG1%5FRL1/TSGR1%5F93/Docs> [retrieved on 20180524]
- ZTE: "Maintenance for beam management", vol. RAN WG1, no. Gothenburg, Sweden; 20180820 - 20180824, 11 August 2018 (2018-08-11), XP051515581, Retrieved from the Internet <URL:http://www.3gpp.org/ftp/tsg%5Fran/WG1%5FRL1/TSGR1%5F94/Docs/R1%2D1808196%2Ezip> [retrieved on 20180811]
- 3GPP TS 38.214 V15.2.0, '3GPP; TSGRAN; NR; Physical layer procedures for data (Release 15)', 2018.06.29 See sections 5.1.5, 5.1.6.3, 6.1.1.2-6.2.3.1.
- MEDIATEK INC., 'Summary 1 on Remaining issues on Beam Failure Recovery', R1-1807661, 3GPP TSG RAN WG1 Meeting #93, Busan, Korea, 24 May 2018 See sections 2.3, 2.7.
- INTEL CORPORATION: "Summary of Codebook Based UL Transmission", 3GPP DRAFT; R1-1805664 SUMMARY OF CODEBOOKBASED UL TRANSMISSION_R4, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Sanya, China; 20180416 - 20180420, R1-1805664 Summary of CodebookBased UL Transmissio, 19 April 2018 (2018-04-19), Mobile Competence Centre ; 650, route des Lucioles ; F-06921 Sophia-Antipolis Cedex ; France, XP051427790
- ERICSSON: "Feature lead summary 2 for beam measurement and reporting", 3GPP DRAFT; R1-1807679 FEATURE LEAD SUMMARY 2 FOR BEAM MEASUREMENT AND REPORTING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Busan; 20180521 - 20180525, R1-1807679 Feature lead summary 2 for beam measure, 22 May 2018 (2018-05-22), Mobile Competence Centre ; 650, route des Lucioles ; F-06921 Sophia-Antipolis Cedex ; France, XP051442709

**Description**

CROSS REFERENCE TO RELATED APPLICATIONS

This application claims the benefit of and priority from PCT International Patent Application Serial No. PCT/CN2018/105276, filed on September 12, 2018 and entitled "SOUNDING REFERENCE SIGNAL (SRS)TRIGGERING AND CONFIGURATION," and from U.S. Provisional Patent Application Serial No. 62/748,054, filed on October 19, 2018 and entitled " SOUNDING REFERENCE SIGNAL (SRS) TRIGGERING AND CONFIGURATION".

FIELD

Various embodiments generally may relate to the field of wireless communications, and particularly to Sounding Reference Signal (SRS) triggering in New Radio networks.

BACKGROUND

Current Third Generation Partnership Project (3GPP) New Radio (NR) specifications do not specifically address issues related to the triggering of aperiodic SRS resource set in the context of the following: various SRS resource set usages, SRS User Equipment (UE) configurations, SRS resource indicator (SRI) when a transmit beam from the UE is updated, and/or SRS resource mapping when Phase Tracking Reference Signal (PT-RS) is not configured.
ERICSSON, "Feature lead summary 3 on beam measurement and reporting", vol. RAN WG1, no. Athens, Greece; 20180226 - 20180302, (20180301), 3GPP DRAFT; R1-1803417 relates to beam measurement and reporting.
"3rd Generation Partnership Project; Technical Specification Group Radio Access Network; NR; Physical layer procedures for data (Release 15)", 3GPP STANDARD; TECHNICAL SPECIFICATION; 3GPP TS 38.214, 3RD GENERATION PARTNERSHIP PROJECT (3GPP) sets out a UR sounding procedure.
ERICSSON, "Feature lead summary 1 for beam measurement and reporting", vol. RAN WG1, no. Busan; 20180521 - 20180525, (20180524), 3GPP DRAFT; R1-1807625 relates to proposals relating to beam measurement and reporting.
ZTE, "Maintenance for beam management", vol. RAN WG1, no. Gothenburg, Sweden; 20180820 - 20180824, (20180811), 3GPP DRAFT; R1-1808196 relates to beam management.

BRIEF DESCRIPTION OF THE DRAWINGS

Fig. 1 illustrates a signaling diagram between a New Radio (NR) User Equipment (UE) and a NR evolved Node B (gNodeB) including SRS signaling and a transmit beam update;
Fig. 2 illustrates a flow to determining a scheduling offset for aperiodic SRS according to some embodiments;
Fig. 3 illustrates a signaling diagram between a NR UE and a gNodeB including SRS signaling and a transmit beam update according to some embodiments;
Fig. 4 illustrates a measurement model flow and circuitry for beam measurement reports by the UE to the gNodeB according to some embodiments;
Fig. 5 illustrates a process according to an embodiment;
Fig. 6 illustrates an architecture of a system of a network according to some embodiments; and
Fig. 7 illustrates example interfaces of baseband circuitry according to various embodiments.

DETAILED DESCRIPTION

The invention is defined by the appended independent claims. The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc. in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrase "A or B" means (A), (B), or (A and B).
In Release 15 (Rel-15) new radio (NR) or fifth generation (5G) networks, a Sounding Reference Signal (SRS) resource set may be configured for different types of usages including, respectively codebook based transmission, non-codebook based transmission, a transmission involving antenna switching or a transmission involving beam management. One SRS resource set may include one or more SRS resources.

In Rel-15, if an SRS resource set is configured for non-codebook based transmission, different single layer precoders could be applied to respective SRS resources of the SRS resource set. There are two options to determine the precoders: (1) the precoder may be derived based on measurement of a Channel State Information Reference Signal (CSI-RS); and (2) the precoder may be selected from a User Equipment (UE) without measurement of a downlink reference signal. A choice as to which of options (1) or (2) above the UE should select is determined by whether the associated CSI-RS is configured for the SRS resource set for which precoders are to be determined.

Since the complexity as between UEs may be different in the context of using either ones of option (1) or (2) above, a problem exists with respect to determining how to trigger an aperiodic SRS resource set for different types of SRS resource set usages.

In Rel-15, for a SRS resource set for a transmission involving beam management (BM), information regarding a spatial relationship for the SRS resources of the SRS resource set could be configured. If the above spatial relationship information is configured, the UE applies a corresponding transmit (TX) beam for this SRS resource set. If the above spatial relationship information is not configured, the UE has to select a suitable TX beam, which may require additional effort on the part of the UE.

Accordingly, a problem exists with respect to determining how to trigger an aperiodic SRS resource set for both cases, that is, for a case where a spatial relationship for a SRS resource set is and for a case where the spatial relationship is not configured.

In Rel-15, for a SRS resource set for a non-codebook based transmission, a spatial domain transmission filter (TX beam) for a physical uplink shared channel (PUSCH) is determined by the UE by decoding an indicated SRS resource indicator (SRI) in a Downlink Control Information (DCI) from a NR evolved Node B (gNodeB). The spatial domain transmission filter is indicated in the DCI if a plurality of SRS resources are configured for the SRS resource set, or if a single SRS resource is configured for the SRS resource set. In addition, for a non-codebook based transmission, if an associated CSI-RS is configured, the UE could use the same beam to both transmit the PUSCH and also to receive the associated CSI-RS. If an associated CSI-RS is not configured for a non-codebook based transmission, the TX beam for PUSCH is based on the information regarding the spatial relationship for the indicated SRS resources of the SRS resource set.

Currently, Rel-15 specifies that the indicated SRI is to be associated with the latest SRS transmission from the UE before the scheduling DCI that indicates the SRI.

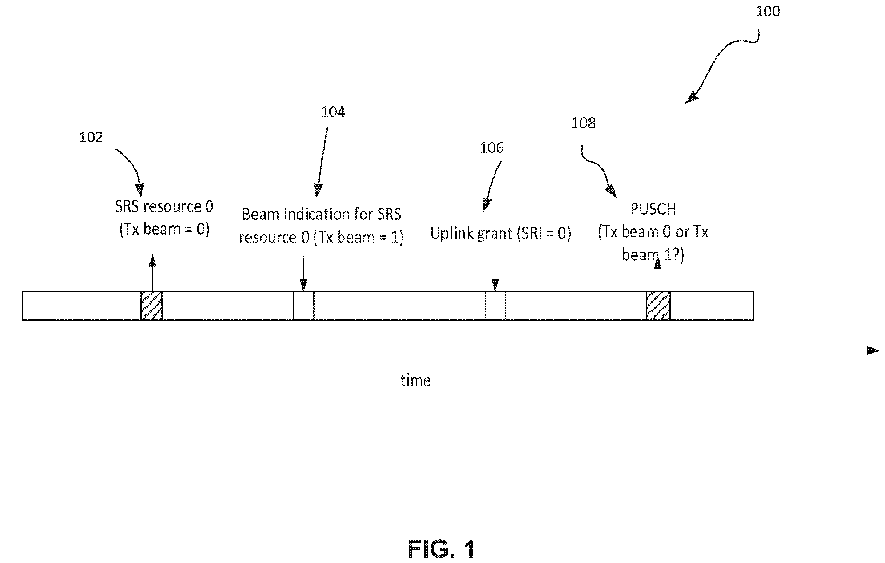

Referring first to Fig. 1, a signaling diagram 100 is shown depicting a SRS transmission 102 on resource 0 using a TX beam = 0, followed by a downlink beam indication 104 for the SRS on resource 0 indicating an updated TX beam = 1. The downlink beam indication 104 is followed by an uplink grant 106 in the form of a DCI. Since, according to Rel-15, the indicated SRI is to be associated with the latest SRS transmission, in this case, the SRI is to be associated with SRS on resource 0. However, under the scenario of Fig. 1, a problem arises since the TX beam for the indicated SRS has been updated from TX beam = 0 to TX beam = 1, but a new SRS associated with TX beam = 1 has not been transmitted to indicate the TX beam = 1. In such a case, it is not clear whether the UE should use the new beam to transmit a PUSCH or the old beam.

In addition, in Rel-15, for non-codebook based transmissions, when phase tracking reference signal (PT-RS) is enabled, a PT-RS port index could be configured per SRS resource. However, it is possible that the PT-RS port index is actually not configured for an indicated SRS resource, in which case, a problem arises where the UE does not know the PT-RS port correspondence to respective SRS resources.

Some embodiments include devices, methods, and systems to trigger and configure SRS including: (1) aperiodic SRS triggering for non-codebook based transmission; (2) aperiodic SRS triggering for beam management; (3) PUSCH/physical uplink control channel (PUCCH)/SRS beam assumption when a SRS spatial relation is updated; and (4) UE assumptions for a PT-RS port index if a PT-RS port is not configured for an indicated SRS resource

## Aperiodic SRS triggering

Because of different UE implementation schemes for different configurations for SRS for non-codebook transmissions and beam management transmissions, the minimal scheduling offset between the last symbol of scheduling DCI and the first symbol of aperiodic SRS may be different. M1 as used herein is to refer to a smaller scheduling offset, and M2 as used herein is to refer to a larger scheduling offset, where M1 and M2 could be based on N2 defined in Table 1 and Table 2 below for aperiodic SRS triggering.

**Table 1: N2 for timing capability 1**

| Subcarrier spacing configuration $\mu$ | PUSCH preparation time N2 [symbols] |
| --- | --- |
| 0 | 10 |
| 1 | 12 |
| 2 | 23 |
| 3 | 36 |

**Table 2: N2 for PUSCH timing capability 2**

| Subcarrier spacing configuration $\mu$ | PUSCH preparation time N2 [symbols] |
| --- | --- |
| 0 | 5 |
| 1 | 5.5 |
| 2 | 11 for frequency range 1 |

In an embodiment, for SRS with usage configured to be non-codebook, the minimal scheduling offset is determined by whether an associated CSI-RS is configured. If an associated CSI-RS is configured, the minimum scheduling offset may be M2, such as, for example, M2=N2+42. If an associated CSI-RS is not configured, the minimum scheduling offset may be M1, such as, for example, M1=N2.

In another embodiment, for SRS with usage configured to be beam management, the minimum scheduling offset may be determined by whether spatial relation information (i.e. information regarding the spatial relationship for the indicated SRS resources of the SRS resource set) is configured. If spatial relation information is configured, the minimum scheduling offset may be M1, such as, for example, M1=N2+14. If spatial relation information is not configured, the minimal scheduling offset may be M2, such as, for example, M2=N2+42.

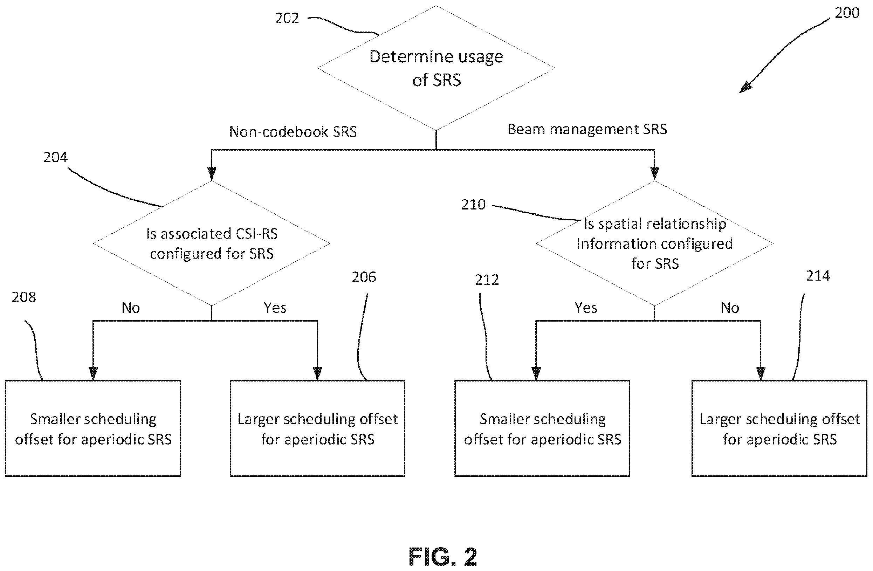

Referring next to Fig. 2, a process 200 is shown for aperiodic SRS scheduling offset selection. At operation 202, the process includes determining the usage type of the SRS. If the SRS is determined at 202 to be of the non-codebook transmission type, then, at operation 204, the process includes determining whether an associated CSI-RS has been configured for the SRS. If yes, then, at operation 206, the process includes selecting a larger scheduling offset for the aperiodic SRS, and if no, then, at operation 208, the process includes selecting a smaller scheduling offset for the aperiodic SRS. If the SRS is determined at operation 202 to be of the beam management type on the other hand, then, at operation 210, the process includes determining whether a spatial relationship information has been configured for the SRS. If yes, then, at operation 212, the process includes selecting a smaller scheduling offset for the aperiodic SRS, and if no, then, at operation 214, the process includes selecting a larger scheduling offset for the aperiodic SRS.

**PUSCH/PUCCH/SRS beam selection when SRS spatial relation information is updated**

In an embodiment, for codebook based or non-codebook based transmissions, the spatial domain transmission filter (TX beam) for PUSCH may be the same as that corresponding to the indicated SRS resource, regardless of whether the SRS is actually transmitted or not. In one example, for the case shown in Fig. 1 described above, UE may use TX beam 1 to transmit PUSCH.

In another embodiment, for a codebook based or non-codebook based transmission, the spatial domain transmission filter (TX beam) for PUSCH may be the same as the spatial domain transmission filter applied to the latest transmission for the indicated SRS resource, where the latest transmission for the indicated SRS resource is based on the SRS transmitted k slots before the scheduling DCI or the scheduled PUSCH, where k may be fixed, e.g. k=0, or be configured via higher layer signaling.

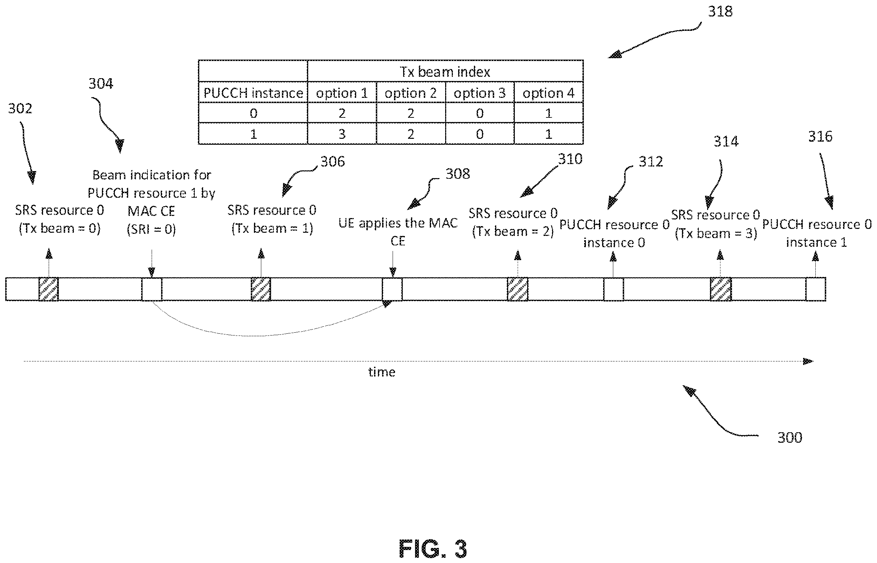

In other embodiments, for a spatial relation information update for PUCCH/SRS, for example, in instances where the TX beam for transmission by the UE has be updated, the indicated Synchronization Signal Block (SSB)/CSI-RS/SRS (that is, the SSB, CSI-RS/SRS that is indicated by the gNodeB for the subsequent Tx beam to be used by the UE for uplink transmission) may be associated with one instance of a SSB/CSI-RS/SRS signal, for example according to any of the options to be described below and in relation to Fig. 3.

Referring first to Fig. 3, a signaling diagram 300 is shown in the time domain. Signaling diagram includes uplink transmissions from a UE to a gNodeB, including transmissions 302, 306, 310, 312, 314, and 316, and downlink transmissions from the gNodeB to the UE, including transmissions 304. Transmission 302 from the UE includes a SRS transmission on SRS resource 0 using Tx beam 0. At a later point in time, the UE receives from the gNodeB and decodes a transmission 304 on resource 1 including a beam indication, for example by way of a medium access control (MAC) control element (CE), for PUCCH, based on a SRI indication of 0. For example, the transmission 304 may include one or more indicated SRS for subsequent Tx beams to be used by the UE for uplink transmission of PUCCH in successive PUCCH instances. Thereafter, transmission 306 from the UE includes a SRS transmission on SRS resource 0 using Tx beam 1. Then, at point 308, the UE applies parameters from the MAC CE in transmission 304. Thereafter, transmission 310 from the UE includes a SRS transmission on SRS resource 0 using Tx beam 2, and then, at transmission 312, the UE transmits a PUCCH on resource 0 at an instance 0. Transmission 312 is followed by transmission 314 from the UE which includes a SRS transmission on SRS resource 0 using Tx beam 3. Then, then, at transmission 316, the UE transmits a PUCCH on resource 0 at an instance 1. Table 318 in Fig. 3 helps to show various Tx beam indexes for each of PUCCH instance 0 at transmission 312 and PUCCH instance 1 at transmission 316. The PUCCH transmissions 312 and 316 in diagram 300 may be transmitted based on respective Tx beam indexes based on up to four options as will be described further below, and as set forth in Table 318.

According to option 1, a downlink indicated SSB/CSI-RS/SRS in the spatial relation information (e.g. transmission 304 of Fig. 3) may correspond with the latest time instance k, e.g. k=0, symbols for a SSB/CSI-RS/SRS transmission before each transmission of PUCCH/SRS. Referring to Table 318, according to the embodiment of option 1: (1) for PUCCH instance 0, this means that the Tx Beam index would correspond with the latest time instance of SRS transmission before the transmission of PUCCH instance 0, which SRS transmission uses Tx Beam index 2; and (2) for PUCCH instance 1, this means that the Tx Beam index would correspond with the latest time instance of SRS transmission before the transmission of PUCCH instance 1, which SRS transmission uses Tx Beam index 3.

According to option 2, the indicated SSB/CSI-RS/SRS in the spatial relation information (e.g. transmission 304 of Fig. 3) may be associated with the latest time instance k, e.g. k=0, symbols for a SSB/CSI-RS/SRS transmission before the first transmission of PUCCH/SRS after the reconfiguration of its spatial relation info. Referring to Table 318, according to the embodiment of option 2: (1) for PUCCH instance 0, this means that the Tx Beam index would correspond with the latest time instance of SRS transmission before the first transmission of PUCCH (at instance 0) but after the reconfiguration of its spatial relation information at point 308, which SRS transmission at 310 uses Tx Beam index 2; and (2) for PUCCH instance 1, this means that the Tx Beam index would correspond with the latest time instance of SRS transmission before the before the first transmission of PUCCH (again at instance 0) but after the reconfiguration of its spatial relation information at point 308, which SRS transmission uses Tx Beam index 2.

According to option 3, the indicated SSB/CSI-RS/SRS in the spatial relation information (e.g. transmission 304 of Fig. 3) may be associated with the instance of SSB/CSI-RS/SRS that is k, e.g. k=0, symbols before the UE receives the reconfiguration of the spatial relation information from the gNodeB. Referring to Table 318, according to the embodiment of option 3: (1) for PUCCH instance 0, this means that the Tx Beam index would correspond with the instance of SRS transmission before the beam indication at transmission 304, which SRS transmission at 302 uses Tx Beam index 0; and (2) for PUCCH instance 1, this again means that the Tx Beam index would correspond with the instance of SRS transmission before the beam indication at transmission 304, which SRS transmission at 302 uses Tx Beam index 0.

According to option 4, the indicated SSB/CSI-RS/SRS in the spatial relation information (e.g. transmission 304 of Fig. 3) may be associated with the instance of SSB/CSI-RS/SRS that is k, e.g. k=0, symbols before the UE applies the configured spatial relation information. Referring to Table 318, according to the embodiment of option 4: (1) for PUCCH instance 0, this means that the Tx Beam index would correspond with the instance of SRS transmission before the point in time 308 at which the UE applies the MAC CE, which SRS transmission at 306 uses Tx Beam index 1; and (2) for PUCCH instance 1, this again means that the Tx Beam index would correspond with the instance of SRS transmission before the point in time 308 at which the UE applies the MAC CE, which SRS transmission at 306 uses Tx Beam index 1.

According to option 5, the UE may not change the spatial domain filter for each instance of SRS for beam management and/or SSB/CSI-RS with the same ID.

### UE assumption for PT-RS port index

In an embodiment, for non-codebook based transmission, if PT-RS is enabled, the UE may expect the PT-RS port index is to be configured for SRS with usage configured to be non-codebook, or the UE may expect the PT-RS port index is to be configured for indicated SRS resource(s) in a set with usage configured to be non-codebook.

In another embodiment, for non-codebook based transmission, if PT-RS is enabled and PT-RS port index for an indicated SRS resource is not configured, the UE may make any of the assumptions set forth according to options 1-3 below.

According to option 1, the UE may not transmit PT-RS.

According to option 2, the UE may assume the PT-RS port index is based on a default value, such as a default value of 0.

According to option 3: the UE may assume only a single PT-RS port is transmitted when PT-RS is configured.

**Simultaneous transmission for multiple SRS resources**

In another embodiment, a UE may report the maximum number of SRS resource sets for beam management it may support for each time domain behavior as a UE capability, where the time domain behavior indicates whether the SRS is aperiodic, semi-persistent or periodic. In one example, the UE capability may be reported as follows:

```
uplinkBeamManagement                SEQUENCE {

    maxNumberSRS-ResourcePerSet-BM        ENUMERATED {n2, n4, n8, n16},

    maxNumberSRS-ResourceSet          INTEGER (1..8)

    maxNumberSRS-ResourceSetPeriodic        INTEGER (0..2)

    maxNumberSRS-ResourceSetAperiodic       INTEGER (0..2)

    maxNumberSRS-ResourceSetSemiPersistent      INTEGER (0..2)

}
```

Further in each SRS resource set or each SRS resource, an ID for simultaneous transmission, e.g. antenna port(s) group ID, may be indicated according to one embodiment. In such a case, when SRS resource sets with different time domain behavior are scheduled or configured in the same symbol, if the antenna port(s) group ID is different, those SRS resources may be transmitted simultaneously; otherwise, the SRS with highest priority may be transmitted and the other SRS may be dropped, and the priority may be based on the time domain behavior, for example with the order of priority decreasing from aperiodic SRS to semi-persistent SRS and finally to periodic SRS.

In another embodiment, SRS resources from different SRS resource sets configured with different usage, e.g. codebook, non-codebook, antenna switching or beam management, may not be simultaneously transmitted. Thus, only the SRS resources from different SRS resource sets configured with the same usage may be simultaneously transmitted.

When collisions happen between SRS resources for different usages with the same time domain behavior, the SRS with the highest priority may be transmitted and the other SRS may be dropped. In one example, the dropping rule could be that a priority decreases from beam management to codebook to non-codebook to antenna switching SRS transmissions.

In the event of carrier aggregation, when collision happens between SRS resources, the dropping rule may be based on component carrier (CC) index and/or SRS usage and/or time domain behavior for SRS. In one example, the priority may be calculated using $16*x+8*y+z$, where $x = 1$ for PCell and 0 for SCell; $y = 2$ for aperiodic SRS, $y = 1$ for semi-persistent SRS, $y = 0$ for periodic SRS; $z = 4$ for beam management, $z = 3$ for codebook, $z = 2$ for non-codebook, $z = 1$ for antenna switching. Note that the value of each variable and the order of $x/y/z$ in the equation may be different in different examples.

**Beam Management**

Beam management refers to a set of layer 1/layer 2 (L1/L2) procedures to acquire and maintain a set of transmission/reception point(s) (TRP or TRxP to be used interchangeably) and/or UE beams that may be used for downlink (DL) and uplink (UL) transmission/reception. The TRP may be used herein to refer to a device with an antenna array (with one or more antenna elements) available to the network and located at a specific geographical location. The TRP may include a gNodeB. Beam determination refers to TRP(s) or to the UE's ability to select its own Tx/Rx beam(s). Beam measurement refers to TRP or to the UE ability to measure characteristics of received beamformed signals. Beam reporting refers the UE's ability to report information of beamformed signal(s) based on beam measurement. Beam sweeping refers to operation(s) involving covering a spatial area with beams transmitted and/or received during a time interval in a predetermined manner.

Tx/Rx beam correspondence at a TRP holds if at least one of the following conditions are satisfied: TRP is able to determine a TRP Rx beam for the uplink reception based on the UE's downlink measurement on TRP's one or more Tx beams; and TRP is able to determine a TRP Tx beam for the downlink transmission based on TRP's uplink measurement on TRP's one or more Rx beams. Tx/Rx beam correspondence at a UE holds if at least one of the following is satisfied: the UE is able to determine a UE Tx beam for the uplink transmission based on the UE's downlink measurement on UE's one or more Rx beams; the UE is able to determine a UE Rx beam for the downlink reception based on TRP's indication based on uplink measurement on UE's one or more Tx beams; and Capability indication of the UE beam correspondence related information to TRP is supported.

In some embodiments, DL beam management may include procedures P-1, P-2, and P-3. Thus, a procedure P-1 may be used to enable UE measurement on different TRP Tx beams to support selection of TRP Tx beams/UE Rx beam(s). For beamforming at TRP at the gNodeB, procedure P-1 typically includes a intra/inter-TRP Tx beam sweep from a set of different beams. For beamforming at the UE, procedure P-1 typically includes a UE Rx beam sweep from a set of different beams.

Procedure P-2 may be used to enable UE measurement on different TRP Tx beams to possibly change inter/intra-TRP Tx beam(s). Procedure P-2 may be a special case of procedure P-1 wherein procedure P-2 is used for a possibly smaller set of beams for beam refinement than procedure P-1. Procedure P-3 may be used to enable UE measurement on the same TRP Tx beam to change the UE Rx beam in the case UE uses beamforming. Procedures P-1, P-2, and P-3 may be used for aperiodic beam reporting.

UE measurements based on reference signals (RS) for beam management (at least CSI-RS) may include K beams (where K is a total number of configured beams), and the UE may report measurement results of N selected Tx beams from a gNodeB (where N may or may not be a fixed number). The procedure based on RS for mobility purposes may not be precluded. Beam information that is to be reported may include measurement quantities for the N beam(s) and information indicating N DL Tx beam(s), if N < K. Other information or data may be included in or with the beam information. When a UE is configured with K' >1 non-zero power (NZP) CSI-RS resources, a UE may report N' CSI-RS Resource Indicator (CRIs).

The UE may trigger a mechanism to recover from beam failure, which procedure is referred to a "beam recovery", "beam failure recovery request procedure", and/or the like. A beam failure event may occur when the quality of beam pair link(s) of an associated control channel falls below a threshold, when a time-out of an associated timer occurs, or the like. The beam recovery mechanism is triggered when beam failure occurs. The network may explicitly configure the UE with resources for UL transmission of signals for recovery purposes. Configurations of resources are supported where the base station (e.g., a TRP or gNodeB, or the like) is listening from all or partial directions (e.g., a random access region). The UL transmission/resources to report beam failure may be located in the same time instance as a Physical Random Access Channel (PRACH) or resources orthogonal to PRACH resources, or at a time instance (configurable for a UE) different from PRACH. Transmission of DL a signal may be supported for allowing the UE to monitor the beams for identifying new potential beams.

For beam failure recovery, a beam failure may be declared if one, multiple, or all serving PDCCH beams fail. The beam failure recovery request procedure may be initiated when a beam failure is declared. For example, the beam failure recovery request procedure may be used for indicating to a serving gNodeB (or TRP) of a new SSB or CSI-RS when beam failure is detected on a serving SSB(s)/CSI-RS(s). A beam failure may be detected by the lower layers and indicated to a Media Access Control (MAC) entity of the UE.

Beam management also includes providing or not providing beam-related indications. When beam-related indication is provided, information pertaining to a UE-side beamforming/receiving procedure used for CSI-RS-based measurement may be indicated through Quasi Co-Location to the UE. The same or different beams on the control channel and the corresponding data channel transmissions may be supported.

DL beam indications may be based on one or more Transmission Configuration Indication (TCI) state(s). The TCI state(s) are indicated in a TCI list that is configured by a radio resource control (RRC) and/or Media Access Control (MAC) Control Element (CE).

## Antenna Port Quasi Co-Location

The UE may be configured with a list of up to M TCI-State configurations within the higher layer parameter PDSCH-Config to decode PDSCH according to a detected PDCCH with DCI intended for the UE and the given serving cell, where M depends on the UE capability. Each TCI-State contains parameters for configuring a quasi co-location relationship between one or two downlink reference signals and the DM-RS ports of the PDSCH. The quasi co-location relationship is configured by the higher layer parameter qcl-Type1 for the first DL RS, and qcl-Type2 for the second DL RS (if s second DL RS is configured). For the case of two DL RS', the QCL types may not be the same, regardless of whether the references are to the same DL RS or different DL RS'. The quasi co-location types corresponding to each DL RS is given by the higher layer parameter qcl-Type in QCL-Info and may take one of the following values: QCL-TypeA: {Doppler shift, Doppler spread, average delay, delay spread); QCL-TypeB: {Doppler shift, Doppler spread}; QCL-TypeC: {average delay, Doppler shift}; QCL-TypeD: {Spatial Rx parameter}.

The UE receives an activation command used to map up to 8 TCI states to the codepoints of the DCI field 'Transmission Configuration Indication'. When the HARQ-ACK corresponding to the PDSCH carrying the activation command is transmitted in slot n, the indicated mapping between TCI states and codepoints of the DCI field 'Transmission Configuration Indication' may be applied starting from slot $n + 3N_{slot}^{subframe,\mu} + 1$. After the UE receives the higher layer configuration of TCI states and before reception of the activation command, the UE may assume that the DM-RS ports of PDSCH of a serving cell are quasi co-located with the Synchronization Signal/Physical Broadcast Channel (SS/PBCH) block determined in the initial access procedure with respect to 'QCL-TypeA', and when applicable, also with respect to 'QCL-TypeD'.

If a UE is configured with the higher layer parameter tci-PresentInDCI that is set as 'enabled' for the control resource set (CORESET) scheduling the PDSCH, the UE may assume that the TCI field is present in the DCI format 1_1 of the PDCCH transmitted on the CORESET. If tci-PresentInDCI is not configured for the CORESET scheduling the PDSCH or the PDSCH is scheduled by a DCI format 1_0, for determining PDSCH antenna port quasi co-location, the UE may assume that the TCI state for the PDSCH is identical to the TCI state applied for the CORESET used for the PDCCH transmission.

If the tci-PresentInDCI is set as 'enabled', when the PDSCH is scheduled by DCI format 1_1, the UE may use the TCI-State according to the value of the 'Transmission Configuration Indication' field in the detected PDCCH with DCI for determining PDSCH antenna port quasi co-location. The UE may assume that the DM-RS ports of PDSCH of a serving cell are quasi co-located with the RS(s) in the TCI state with respect to the QCL type parameter(s) given by the indicated TCI state if the time offset between the reception of the DL DCI and the corresponding PDSCH is equal to or greater than a threshold Threshold-Sched-Offset, where the threshold is based on reported UE capability.

For both of the cases where tci-PresentInDCI is set to 'enabled' and tci-PresentInDCI is not configured, if the offset between the reception of the DL DCI and the corresponding PDSCH is less than the threshold Threshold-Sched-Offset, the UE may assume that the DM-RS ports of PDSCH of a serving cell are quasi co-located with the RS(s) in the TCI state with respect to the QCL parameter(s) used for the PDCCH quasi co-location indication of the lowest CORESET-ID in the latest slot in which one or more CORESETs within the active BWP of the serving cell are configured for the UE. If none of the configured TCI states contains 'QCL-TypeD', the UE may obtain the other QCL assumptions from the indicated TCI states for its scheduled PDSCH irrespective of the time offset between the reception of the DL DCI and the corresponding PDSCH.

For a periodic CSI-RS resource in a NZP-CSI-RS-ResourceSet configured with higher layer parameter trs-Info, the UE may expect that a TCI-State indicates one of the following quasi-colocation type(s):

- 'QCL-TypeC' with an SS/PBCH block and, when applicable, 'QCL-TypeD' with the same SS/PBCH block, or
- 'QCL-TypeC' with an SS/PBCH block and, when applicable, 'QCL-TypeD' with a CSI-RS resource in an non-zero power (NZP) CSI-RS-ResourceSet configured with higher layer parameter repetition, or

for an aperiodic CSI-RS resource in a NZP-CSI-RS-ResourceSet configured with higher layer parameter trs-Info, the UE may expect that a TCI-State indicates 'QCL-TypeA' with a periodic CSI-RS resource in a NZP-CSI-RS-ResourceSet configured with higher layer parameter trs-Info and, when applicable, 'QCL-TypeD' with the same periodic CSI-RS resource.

For a CSI-RS resource in a NZP-CSI-RS-ResourceSet configured without higher layer parameter trs-Info and without the higher layer parameter repetition, the UE may expect that a TCI-State indicates one of the following quasi co-location type(s):

- 'QCL-TypeA' with a CSI-RS resource in a NZP-CSI-RS-ResourceSet configured with higher layer parameter trs-Info and, when applicable, 'QCL-TypeD' with an SS/PBCH block, or
- 'QCL-TypeA' with a CSI-RS resource in a NZP-CSI-RS-ResourceSet configured with higher layer parameter trs-Info and, when applicable, 'QCL-TypeD' with a CSI-RS resource in a NZP-CSI-RS-ResourceSet configured with higher layer parameter repetition, or
- 'QCL-TypeB' with a CSI-RS resource in a NZP-CSI-RS-ResourceSet configured with higher layer parameter trs-Info when 'QCL-TypeD' is not applicable.

For a CSI-RS resource in a NZP-CSI-RS-ResourceSet configured with higher layer parameter repetition, the UE may expect that a TCI-State indicates one of the following quasi co-location type(s):

- 'QCL-TypeA' with a CSI-RS resource in a NZP-CSI-RS-ResourceSet configured with higher layer parameter trs-Info and, when applicable, 'QCL-TypeD' with the same CSI-RS resource, or
- 'QCL-TypeA' with a CSI-RS resource in a NZP-CSI-RS-ResourceSet configured with higher layer parameter trs-Info and, when applicable, 'QCL-TypeD' with a CSI-RS resource in a NZP-CSI-RS-ResourceSet configured with higher layer parameter repetition, or
- 'QCL-TypeC' with an SS/PBCH block and, when applicable, 'QCL-TypeD' with the same SS/PBCH block.

For the DM-RS of PDCCH, the UE may expect that a Tel-State indicates one of the following quasi co-location type(s):

- 'QCL-TypeA' with a CSI-RS resource in a NZP-CSI-RS-ResourceSet configured with higher layer parameter trs-Info and, when applicable, 'QCL-TypeD' with the same CSI-RS resource, or
- 'QCL-TypeA' with a CSI-RS resource in a NZP-CSI-RS-ResourceSet configured with higher layer parameter trs-Info and, when applicable, 'QCL-TypeD' with a CSI-RS resource in an NZP-CSI-RS-ResourceSet configured with higher layer parameter repetition, or
- 'QCL-TypeA' with a CSI-RS resource in a NZP-CSI-RS-ResourceSet configured without higher layer parameter trs-Info and without higher layer parameter repetition, when 'QCL-TypeD' is not applicable.

For the DM-RS of PDSCH, the UE may expect that a TCI-State indicates one of the following quasi co-location type(s):

- 'QCL-TypeA' with a CSI-RS resource in a NZP-CSI-RS-ResourceSet configured with higher layer parameter trs-Info and, when applicable, 'QCL-TypeD' with the same CSI-RS resource, or
- 'QCL-TypeA' with a CSI-RS resource in a NZP-CSI-RS-ResourceSet configured with higher layer parameter trs-Info and, when applicable, 'QCL-TypeD' with a CSI-RS resource in an NZP-CSI-RS-ResourceSet configured with higher layer parameter repetition,or
- QCL-TypeA' with CSI-RS resource in a NZP-CSI-RS-ResourceSet configured without higher layer parameter trs-Info and without repetition and, when applicable, 'QCL-TypeD' with the same CSI-RS resource.

### Beam Failure Recovery Request

A beam failure recovery request could be delivered over dedicated PRACH or PUCCH resources. For example, a UE may be configured, for a serving cell, with a set $\bar{q}_0$ of periodic CSI-RS resource configuration indexes by higher layer parameter Beam-Failure-Detection-RS-ResourceConfig and with a set $\bar{q}_1$ of CSI-RS resource configuration indexes and/or SS/PBCH block indexes by higher layer parameter candidate-Beam-RS-List for radio link quality measurements on the serving cell. If there is no configuration, the beam failure detection could be based on CSI-RS or SSB, which is spatially Quasi Co-Located (QCLed) with the PDCCH Demodulation Reference Signal (DMRS). For example, if the UE is not provided with the higher layer parameter Beam-Failure-Detection-RS-ResourceConfig, the UE determines $\bar{q}_0$ to include SS/PBCH blocks and periodic CSI-RS configurations with same values for higher layer parameter TCI-StatesPDCCH as for control resource sets (CORESET) that the UE is configured for monitoring PDCCH.

The physical layer of a UE may assess the radio link quality according to a set $\bar{q}_0$ of resource configurations against a threshold Qout,LR. The threshold Qout,LR may corresponds to a default value of higher layer parameter RLM-IS-OOS-thresholdConfig and Beam-failure-candidate-beam-threshold, respectively. For the set $\bar{q}_0$, the UE may assess the radio link quality only according to periodic CSI-RS resource configurations or SS/PBCH blocks that are quasi co-located, with the DM-RS of PDCCH receptions monitored by the UE. The UE may apply the configured Qin,LR threshold for the periodic CSI-RS resource configurations. The UE may apply the Qout,LR threshold for SS/PBCH blocks after scaling a SS/PBCH block transmission power with a value provided by a higher layer parameter Pc_SS.

If a beam failure indication has been received by a MAC entity from lower layers of a UE, then the MAC entity may start a beam failure recovery timer (beamFailureRecoveryTimer) and may initiate a Random Access procedure. If the beamFailureRecoveryTimer expires, then the MAC entity may indicate a beam failure recovery request failure to upper layers. If a DL assignment or UL grant has been received (e.g., on a PDCCH addressed for a cell radio network temporary identifier (C-RNTI)), then the MAC entity may stop and reset beamFailureRecoveryTimer and consider the beam failure recovery request procedure to be successfully completed.

### Beam Measurement

The UE in the RRC_CONNECTED mode is to measure one or multiple beams of a cell, and the measurement results (e.g., power values) are averaged to derive the cell quality.

The UE derives cell measurement results by measuring one or multiple beams associated per cell as configured by the network. For all cell measurement results in RRC_CONNECTED mode, the UE may apply layer 3 filtering before using the measured results for evaluation of reporting criteria and measurement reporting. For cell measurements, the network may configure Reference Signal Received Power (RSRP), Reference Signal Received Quality (RSRQ), and/or Signal to Interference and Noise Ratio (SINR) as a trigger quantity. Reporting quantities may be the same as the trigger quantity or combinations of quantities (e.g., RSRP and RSRQ; RSRP and SINR; RSRQand SINR; RSRP, RSRQand SINR).

The network may also configure the UE to report measurement information per beam, which may either be measurement results per beam with respective beam identifier(s) or only beam identifier(s)). If beam measurement information is configured to be included in measurement reports, the UE may apply the layer 3 beam filtering. However, the exact layer 1 filtering of beam measurements used to derive cell measurement results is implementation dependent.

The UE may be configured to consider a subset of the detected beams, such as the N best beams above an absolute threshold. Filtering may take place at two different levels include at the physical layer (PHY) to derive beam quality and then at the RRC level to derive cell quality from multiple beams. Cell quality from beam measurements may be derived in the same way for the serving cell(s) and for the non-serving cell(s).

Measurement reports may contain the measurement results of the X best beams if the UE is configured to do so by the gNodeB. For channel state estimation purposes, the UE may be configured to measure CSI-RS resources and estimate a downlink channel state based on the CSI-RS measurements. The UE may feed the estimated channel state back to the gNodeB to be used in link adaptation.

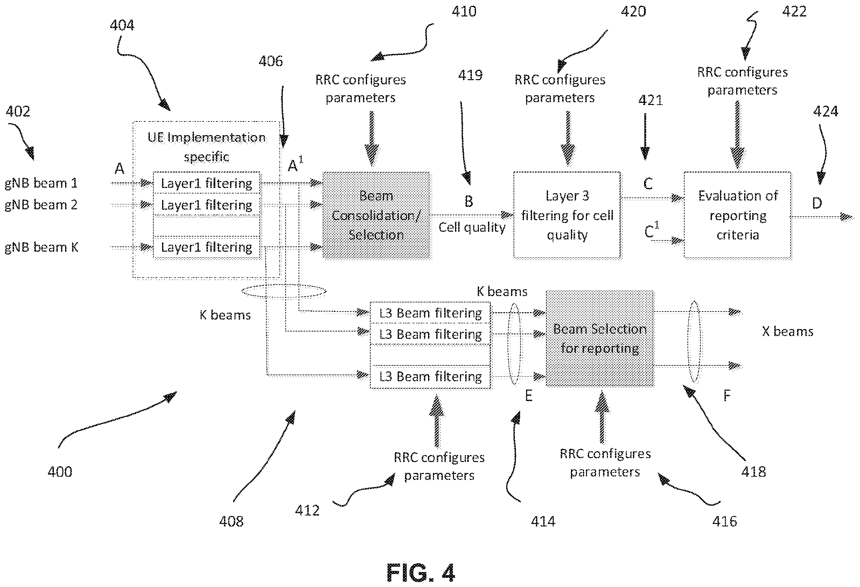

An example measurement model is shown in the illustration of Fig. 4, which is a schematic illustration of a measurement model flow for measurement reports by the UE to the gNodeB. In Fig. 4, point A at 402 includes measurements (e.g., beam specific samples) internal to the PHY for beams from the gNodeB. Layer 1 (L1) filtering at 404 includes internal layer 1 filtering circuitry for filtering the inputs measured at point A 402. The exact filtering mechanisms and how the measurements are actually executed at the PHY may be implementation specific. The measurements (e.g., beam specific measurements) are reported by the L1 filtering to layer 3 (L3) beam filtering circuitry and the beam consolidation/selection circuitry at point A1406.

The Beam Consolidation/Selection circuitry 410 includes circuitry where beam specific measurements are consolidated to derive cell quality. For example, if N > 1, else when N = 1 the best beam measurement may be selected to derive cell quality. The configuration of the beam may be provided by RRC signaling. A measurement (e.g., cell quality) derived from the beam-specific measurements may then be reported at point B 410 to L3 filtering for cell quality circuitry at 420 after beam consolidation/selection. In some embodiments, the reporting period at point B 410 may be equal to one measurement period at point A1.

The L3 filtering for cell quality circuitry 420 may be configured to filter the measurements provided at point B 419. The configuration of the Layer 3 filters at 420 may be provided by the aforementioned RRC signaling or different/separate RRC signaling. In some embodiments, the filtering reporting period at point C 421 may be equal to one measurement period at point B 419. A measurement after processing in the layer 3 filter circuitry may be provided to the evaluation of reporting criteria circuitry 422 at point C 421. In some embodiments, the reporting rate may be identical to the reporting rate at point B 419. This measurement input may be used for one or more evaluation of reporting criteria at point C 421.

Evaluation of reporting criteria circuitry 422 is configured to check whether actual measurement reporting is necessary at point D 424 . The evaluation may be based on more than one flow of measurements at reference point C 421. In one example, the evaluation may involve a comparison between different measurements, such as a measurement provided at point C and another measurement provided at point C1 also at 421. In embodiments, the UE may evaluate the reporting criteria at least every time a new measurement result is reported at point C, C1421. The reporting criteria configuration is provided by the aforementioned RRC signaling (UE measurements) or different/separate RRC signaling. After the evaluation, measurement report information (e.g., as a message) may sent on the radio interface at point D.

Referring back to point A1 406, measurements provided at point A1 406 are provided in the form of K beams 408 to L3 Beam filtering circuitry 412, which is configured to perform beam filtering of the provided measurements (e.g., beam specific measurements). The configuration of the beam filters may be provided by the aforementioned RRC signaling or different/separate RRC signaling. In embodiments, the filtering reporting period at point E 414 may be equal to one measurement period at A1 406. The K beams 408 may correspond to the measurements on New Radio (NR)-synchronization signal (SS) block (SSB) or Channel State Information Reference Signal (CSI-RS) resources configured for L3 mobility by a gNodeB and detected by the UE at L1.

After processing in the beam filter measurement (e.g., beam-specific measurement) at 412, a measurement is provided to beam selection for reporting circuitry at point E 414. This measurement is used as an input for selecting the X measurements to be reported. In embodiments, the reporting rate may be identical to the reporting rate at point A1 406. The beam selection for beam reporting circuitry 416 may be configured to select the X measurements from the measurements provided at point E 414. The configuration of this module may be provided by the aforementioned RRC signaling or different/separate RRC signaling. The beam measurement information to be included in a measurement report is sent or scheduled for transmission on the radio interface at point F 418.

L1 filtering introduces a certain level of measurement averaging. Exactly how and when the UE performs the required measurements is implementation specific to the point that the output at B 419 fulfils the predefined performance requirements. L3 filtering for cell quality and related parameters do not introduce any delay in the sample availability between B 419 and C 421. Measurement at point C, C1421 is the input used in the event evaluation. L3 Beam filtering and related parameters do not introduce any delay in the sample availability between E 414 and F 418.

The measurement reports may include a measurement identity of an associated measurement configuration that triggered the reporting. Cell and beam measurement quantities to be included in measurement reports may be configured by the network (e.g., using RRC signaling); the number of non-serving cells to be reported may be limited through configuration by the network; cells belonging to a blacklist configured by the network may not be used in event evaluation and reporting, and conversely when a whitelist is configured by the network, only the cells belonging to the whitelist may be used in event evaluation and reporting (by contrast), when a whitelist is configured by the network, only the cells belonging to the whitelist may be used in event evaluation and reporting; and beam measurements to be included in measurement reports may be configured by the network (beam identifier only, measurement result and beam identifier, or no beam reporting).

Intra-frequency neighbor (cell) measurements include SSB based intra-frequency measurement(s) and CSI-RS based intra-frequency measurements. SSB based intra-frequency measurements is/are defined as an SSB based intra-frequency measurement provided the center frequency of the SSB of the serving cell and the center frequency of the SSB of the neighbor cell are the same, and the subcarrier spacing of the two SSBs is also the same. CSI-RS based intra-frequency measurements is/are defined as a CSI-RS based intra-frequency measurement provided the bandwidth of the CSI-RS resource on the neighbor cell configured for measurement is within the bandwidth of the CSI-RS resource on the serving cell configured for measurement, and the subcarrier spacing of the two CSI-RS resources is the same.

Inter-frequency neighbor (cell) measurements include SSB based inter-frequency measurement(s) and CSI-RS based inter-frequency measurements. SSB based inter-frequency measurements is/are defined as an SSB based inter-frequency measurement provided the center frequency of the SSB of the serving cell and the center frequency of the SSB of the neighbor cell are different, or the subcarrier spacing of the two SSBs is different. For SSB based measurements, one measurement object corresponds to one SSB and the UE considers different SSBs as different cells. CSI-RS based inter-frequency measurements are defined as a CSI-RS based inter-frequency measurement provided the bandwidth of the CSI-RS resource on the neighbor cell configured for measurement is not within the bandwidth of the CSI-RS resource on the serving cell configured for measurement, or provided the subcarrier spacing of the two CSI-RS resources is different.

Whether a measurement is non-gap-assisted or gap-assisted depends on the capability of the UE, the active BWP of the UE and the current operating frequency. In non-gap-assisted scenarios, the UE may carry out such measurements without measurement gaps. In gap-assisted scenarios, the UE may not be assumed to be able to carry out such measurements without measurement gaps.


**UE Sounding Procedure**

The UE may be configured with one or more Sounding Reference Symbol (SRS) resource sets as configured by the higher layer parameter SRS-ResourceSet. For each SRS resource set, the UE may be configured with $K \geq 1$ SRS resources (higher later parameter SRS-Resource), where the maximum value of K is indicated by [SRS_capability]. The SRS resource set applicability may be configured by the higher layer parameter SRS-SetUse. When the higher layer parameter SRS-SetUse is set to 'BeamManagement', only one SRS resource in each of multiple SRS sets may be transmitted at a given time instant. The SRS resources in different SRS resource sets may be transmitted simultaneously.

For aperiodic SRS at least one state of the DCI field is used to select at least one out of the configured SRS resource set.

The following SRS parameters may be semi-statically configurable by higher layer parameter SRS-Resource.

- srs-ResourceId determines SRS resource configuration identify.
- Number of SRS ports as defined by the higher layer parameter nrofSRS-Ports.
- Time domain behavior of SRS resource configuration as indicated by the higher layer parameter SRS-resourceType, which may be periodic, semi-persistent, aperiodic SRS transmission.
- Slot level periodicity and slot level offset as defined by the higher layer parameters periodicityAndOffset-p or periodicityAndOffset-sp for an SRS resource of type periodic or semi-persistent. The UE is to not expect to be configured with SRS resources in the same SRS resource set SRS-ResourceSet with different slot level periodicities. For an SRS-ResourceSet configured with higher layer parameter resourceType set to 'aperiodic', a slot level offset is defined by the higher layer parameter slotOffset.
- Number of OFDM symbols in the SRS resource, starting OFDM symbol of the SRS resource within a slot including repetition factor R as defined by the higher layer parameter resourceMapping.
- SRS bandwidth $B_{SRS}$ and $C_{SRS}$, as defined by the higher layer parameter freqHopping.
- Frequency hopping bandwidth, $b_{hop}$, as defined by the higher layer parameter freqHopping.
- Defining frequency domain position and configurable shift to align SRS allocation to 4 PRB grid, as defined by the higher layer parameters freqDomainPosition and freqDomainShift, respectively.
- Cyclic shift, as defined by the higher layer parameter cyclicShift-n2 or cyclicShift-n4 for transmission comb value 2 and 4, respectively.

- Transmission comb value as defined by the higher layer parameter transmissionComb.
- Transmission comb offset as defined by the higher layer parameter combOffset-n2 or combOffset-n4 for transmission comb value 2 or 4, respectively.
- SRS sequence ID as defined by the higher layer parameter sequenceId.
- The configuration of the spatial relation between a reference RS and the target SRS, where the higher layer parameter spatialRelationInfo, if configured, contains the ID of the reference RS. The reference RS may be an SS/PBCH block, CSI-RS or an SRS configured on the same or different component carrier and/or bandwidth part as the target SRS.

The UE may be configured by the higher layer parameter resourceMapping in SRS-Resource with an SRS resource occupying a location within the last 6 symbols of the slot.

When PUSCH and SRS are transmitted in the same slot, the UE may be configured to transmit SRS after the transmission of the PUSCH and the corresponding DM-RS.

For the UE configured with one or more SRS resource configuration(s), and when the higher layer parameter resourceType in SRS-Resource is set to 'periodic':

- if the UE is configured with the higher layer parameter spatialRelationInfo containing the ID of a reference 'ssb-Index', the UE is to transmit the target SRS resource with the same spatial domain transmission filter used for the reception of the reference SS/PBCH block, if the higher layer parameter spatialRelationInfo contains the ID of a reference 'csi-RS-Index', the UE is to transmit the target SRS resource with the same spatial domain transmission filter used for the reception of the reference periodic CSI-RS or of the reference semi-persistent CSI-RS, if the higher layer parameter spatialRelationInfo containing the ID of a reference 'srs', the UE is to transmit the target SRS resource with the same spatial domain transmission filter used for the transmission of the reference periodic SRS.

For the UE configured with one or more SRS resource configuration(s), and when the higher layer parameter resourceType in SRS-Resource is set to 'semi-persistent':

- when the UE receives an activation command for an SRS resource, and when the HARQ-ACK corresponding to the PDSCH carrying the selection command is transmitted in slot n, the corresponding actions and the UE assumptions on SRS transmission corresponding to the configured SRS resource set is to be applied starting from slot

$$n + 3N_{slot}^{subframe,\mu} +$$

1. The activation command also contains spatial relation assumptions provided by a list of references to reference signal IDs, one per element of the activated SRS resource set. Each ID in the list refers to a reference SS/PBCH block, NZP CSI-RS resource, or SRS resource configured on the same or different component carrier and/or bandwidth part as the SRS resource(s) in the SRS resource set.

- if an SRS resource in the activated resource set is configured with the higher layer parameter spatialRelationInfo, the UE is to assume that the ID of the reference signal in the activation command overrides the one configured in spatialRelationInfo.

- when the UE receives a deactivation command for an activated SRS resource set, and when the HARQ-ACK corresponding to the PDSCH carrying the selection command is transmitted in slot n, the corresponding actions and UE assumption on cessation of SRS transmission corresponding to the deactivated SRS resource set is to apply starting from slot $n + 3N_{slot}^{subframe,\mu} + 1.$

- if the UE is configured with the higher layer parameter spatialRelationInfo containing the ID of a reference 'ssb-Index', the UE is to transmit the target SRS resource with the same spatial domain transmission filter used for the reception of the reference SS/PBCH block, if the higher layer parameter spatialRelationInfo contains the ID of a reference 'csi-RS-Index', the UE is to transmit the target SRS resource with the same spatial domain transmission filter used for the reception of the reference periodic CSI-RS or of the reference semi-persistent CSI-RS, if the higher layer parameter spatialRelationInfo contains the ID of a reference 'srs', the UE is to transmit the target SRS resource with the same spatial domain transmission filter used for the transmission of the reference periodic SRS or of the reference semi-persistent SRS.

If the UE has an active semi-persistent SRS resource configuration and has not received a deactivation command, the semi-persistent SRS configuration may be considered to be active in the UL BWP which is active when SRS resource configuration is activated, otherwise it may be considered suspended.

For the UE configured with one or more SRS resource configuration(s), and when the higher layer parameter resourceType in SRS-Resource is set to 'aperiodic':

- the UE receives a configuration of SRS resource sets,
- the UE receives a downlink DCI, a group common DCI, or an uplink DCI based command where a codepoint of the DCI may trigger one or more SRS resource set(s). The minimal time interval between the last symbol of the PDCCH triggering the aperiodic SRS transmission and the first symbol of SRS resource is N2 + 42.
- if the UE is configured with the higher layer parameter spatialRelationInfo containing the ID of a reference 'ssb-Index', the UE is to transmit the target SRS resource with the same spatial domain transmission filter used for the reception of the reference SS/PBCH block, if the higher layer parameter spatialRelationInfo contains the ID of a reference 'csi-RS-Index', the UE is to transmit the target SRS resource with the same spatial domain transmission filter used for the reception of the reference periodic CSI-RS or of the reference semi-persistent CSI-RS, or of the latest reference aperiodic CSI-RS. If the higher layer parameter spatialRelationInfo contains the ID of a reference 'srs', the UE is to transmit the target SRS resource with the same spatial domain transmission filter used for the transmission of the reference periodic SRS or of the reference semi-persistent SRS or of the reference aperiodic SRS.

The 2-bit SRS request field in DCI format 0_1, 1_1 indicates the triggered SRS resource set. The 2-bit SRS request field in DCI format 2_3 indicates the triggered SRS resource set.

For PUCCH formats 0 and 2, the UE is to not transmit SRS when semi-persistent and periodic SRS are configured in the same symbol(s) with PUCCH carrying only CSI report(s), or only L1-RSRP report(s) or if aperiodic SRS is configured and PUCCH consists of beam failure request. The UE is to not transmit SRS when semi-persistent or periodic SRS is configured or aperiodic SRS is triggered to be transmitted in the same symbol(s) with PUCCH carrying HARQ-ACK and/or SR. In the case that SRS is not transmitted due to overlap with PUCCH, only the SRS symbol(s) that overlap with PUCCH symbol(s) are dropped. PUCCH is to not be transmitted when aperiodic SRS is triggered to be transmitted to overlap in the same symbol with semi-persistent or periodic PUCCH carrying semi-persistent/periodic CSI report(s) or semi-persistent/periodic L1-RSRP report(s) only.

The UE is not expected to be configured with aperiodic SRS and PUCCH formats 0 or 2 with aperiodic CSI report in the same symbol.

In case of intra-band carrier aggregation, the UE is not expected to be configured with SRS and PUSCH/UL DM-RS/UL PT-RS/PUCCH formats 1, 3 or 4 in the same symbol.

In case of intra-band carrier aggregation, The UE is to not transmit simultaneously SRS resource(s) and PRACH.

When the UE is configured with the higher layer parameter usage in SRS-ResourceSet set to 'antennaSwitching,' and a guard period of Y symbols is configured according to Subclause 6.2.1.2, the UE is to use the same priority rules as defined above during the guard period as if SRS was configured.

## UE SRS frequency hopping procedure

The UE may be configured to transmit an SRS resource on $N_s \in \{1,2,4\}$ adjacent symbols within the last six symbols of a slot, where all antenna ports of the SRS resource are mapped to each symbol of the resource. For a given SRS resource, the UE is configured with repetition factor $R \in \{1,2,4\}$ by higher layer parameter resourceMapping in SRS-Resource where $R \leq Ns$. When frequency hopping within an SRS resource in each slot is not configured (R=Ns), all antenna ports of the SRS resource in each slot are mapped in each of the $N_s$ symbols to the same set of subcarriers in the same set of PRBs. When frequency hopping within as SRS resource in each slot is configured without repetition (R=1), according to the SRS hopping parameters $B_{SRS}$, $C_{SRS}$ and $b_{hop}$, all antenna ports of the SRS resource in each slot are mapped to different sets of subcarriers in each OFDM symbol, where the same transmission comb value is assumed for different sets of subcarriers. When both frequency hopping and repetition within an SRS resource in each slot are configured (Ns=4, R=2), all antenna ports of the SRS resource in each slot are mapped to the same set of subcarriers within each pair of R adjacent OFDM symbols, and frequency hopping across the two pairs is according to the SRS hopping parameters $B_{SRS}$, $C_{SRS}$ and $b_{hop}$.

The UE may be configured $N_s$ =2 or 4 adjacent symbol aperiodic SRS resource with intra-slot frequency hopping within a bandwidth part, where the full hopping bandwidth is sounded with an equal-size subband across $N_s$ symbols when frequency hopping is configured with R=1. The UE may be configured $N_s$ =4 adjacent symbols aperiodic SRS resource with intra-slot frequency hopping within a bandwidth part, where the full hopping bandwidth is sounded with an equal-size subband across two pairs of R adjacent OFDM symbols, when frequency hopping is configured with R=2. All antenna ports of the SRS resource may be mapped to the same set of subcarriers within each pair of R adjacent OFDM symbols of the resource.

The UE may be configured with $N_s$=1 symbol periodic or semi-persistent SRS resource with inter-slot hopping within a bandwidth part, where the SRS resource occupies the same symbol location in each slot. The UE may be configured $N_s$ =2 or 4 symbol periodic or semi-persistent SRS resource with intra-slot and inter-slot hopping within a bandwidth part, where the N-symbol SRS resource occupies the same symbol location(s) in each slot. For Ns=4, when frequency hopping is configured with R=2, intra-slot and inter-slot hopping may be supported with all antenna ports of the SRS resource mapped to different sets of subcarriers across two pairs of R adjacent OFDM symbol(s) of the resource in each slot. All antenna ports of the SRS resource are mapped to the same set of subcarriers within each pair of R adjacent OFDM symbols of the resource in each slot. For Ns= R, when frequency hopping is configured, inter-slot frequency hopping is supported with all antenna ports of the SRS resource mapped to the same set of subcarriers in R adjacent OFDM symbol(s) of the resource in each slot.

**UE sounding procedure for DL CSI acquisition**

When the UE is configured with the higher layer parameter usage in SRS-ResourceSet set as 'antennaSwitching', the UE may be configured with one of the following configurations depending on the indicated UE capability ('1T2R', '2T4R', '1T4R', '1T4R/2T4R', or 'T=R'):

- up to two SRS resource sets configured with a different value for the higher layer parameter resourceType in SRS-ResourceSet set, where each set has two SRS resources transmitted in different symbols, each SRS resource in a given set consisting of a single SRS port, and the SRS port of the second resource in the set is associated with a different UE antenna port than the SRS port of the first resource in the same set, or
- up to two SRS resource sets configured with a different value for the higher layer parameter resourceType in SRS-ResourceSet set, where each SRS resource set has two SRS resources transmitted in different symbols, each SRS resource in a given set consisting of two SRS ports, and the SRS port pair of the second resource is associated with a different UE antenna port pair than the SRS port pair of the first resource, or
- zero or one SRS resource set configured with higher layer parameter resourceType in SRS-ResourceSet set to 'periodic' or 'semi-persistent' with four SRS resources transmitted in different symbols, each SRS resource in a given set consisting of a single SRS port, and the SRS port of each resource is associated with a different UE antenna port, and
- zero or two SRS resource sets each configured with higher layer parameter resourceType in SRS-ResourceSet set to 'aperiodic' and with a total of four SRS resources transmitted in different symbols of two different slots, and where the SRS port of each SRS resource in given two sets is associated with a different UE antenna port. The two sets are each configured with two SRS resources, or one set is configured with one SRS resource and the other set is configured with three SRS resources. The UE is to expect that the two sets are both configured with the same values of the higher layer parameters alpha, p0, pathlossReferenceRS, and srs-PowerControlAdjustmentStates in SRS-ResourceSet. The UE is to expect that the value(s) of the higher layer parameter aperiodicSRS-ResourceTrigger in each SRS-ResourceSet are the same, and the value of the higher layer parameter slottOffset in each SRS-ResourceSet is different. Or,
- up to two SRS resource sets each with one SRS resource, where the number of SRS ports for each resource is equal to 1, 2, or 4.

The UE may be configured with a guard period of Y symbols, in which the UE does not transmit any other signal, in the case the SRS resources of a set are transmitted in the same slot. The guard period may be in-between the SRS resources of the set.

If the indicated UE capability is '1T4R/2T4R,' the UE is to expect to be configured with the same number of SRS ports, either one or two, for all SRS resources in the SRS resource set(s).

If the indicated UE capability is '1T2R', '2T4R', '1T4R', '1T4R/2T4R', the UE is to not expect to be configured or triggered with more than one SRS resource set in the same slot. If the indicated UE capability is 'T=R,' the UE is to not expect to be configured or triggered with more than one SRS resource set in the same symbol. The value of Y is defined by Table 6.2.1.2-1.

Table SRS-1: The minimum guard period between two SRS resources of an SRS resource set for antenna switching

| 9 | $\Delta f = 2^{\mu} \cdot 15$ [kHz] | Y [symbol] |
|---|---|---|
| 0 | 15 | 1 |
| 1 | 30 | 1 |
| 2 | 60 | 1 |
| 3 | 120 | 2 |

**UE sounding procedure between component carriers**

For a carrier of a serving cell with slot formats comprised of DL and UL symbols not configured for PUSCH/PUCCH transmission the UE is to not transmit SRS whenever SRS transmission (including any interruption due to uplink or downlink RF retuning time as defined by higher layer parameters rf-RetuningTimeUL and rf-Retuning-TimeDL) on the carrier of the serving cell and PUSCH/PUCCH transmission carrying HARQ-ACK/positive SR/RI/CRI and/or PRACH happen to overlap in the same symbol and that may result in uplink transmissions beyond the UE's indicated uplink carrier aggregation capability included in the SRS_capability.

For a carrier of a serving cell with slot formats comprised of DL and UL symbols, not configured for PUSCH/PUCCH transmission, the UE is to not transmit a periodic/semi-persistent type 0 SRS whenever periodic/semi-persistent SRS transmission (including any interruption due to uplink or downlink RF retuning time as defined by higher layer parameters rf-RetuningTimeUL and rf-RetuningTimeDL) on the carrier of the serving cell and PUSCH transmission carrying aperiodic CSI happen to overlap in the same symbol and that may result in uplink transmissions beyond the UE's indicated uplink carrier aggregation capability included in the SRS_capability.

For a carrier of a serving cell with slot formats comprised of DL and UL symbols, not configured for PUSCH/PUCCH transmission, the UE is to drop PUCCH/PUSCH transmission carrying periodic CSI comprising only Channel Quality Indicator (CQI)/Precoding Matrix Indicator (PMI), and/or SRS transmission on another serving cell configured for PUSCH/PUCCH transmission whenever the transmission and SRS transmission (including any interruption due to uplink or downlink RF retuning time as defined by higher layer parameters rf-RetuningTimeUL and rf-Retuning-TimeDL) on the serving cell happen to overlap in the same symbol and that may result in uplink transmissions beyond the UE's indicated uplink carrier aggregation capability included in the SRS_capability.

For a carrier of a serving cell with slot formats comprised of DL and UL symbols not configured for PUSCH/PUCCH transmission, the UE is to drop PUSCH transmission carrying aperiodic CSI comprising only CQI/PMI whenever the transmission and aperiodic SRS transmission (including any interruption due to uplink or downlink RF retuning time) as defined by higher layer parameters rf-RetuningTimeUL and rf-RetuningTimeDL) on the carrier of the serving cell happen to overlap in the same symbol and that may result in uplink transmissions beyond the UE's indicated uplink carrier aggregation capability included in the SRS_capability.

For an aperiodic SRS triggered in DCI format 2_3 and if the UE is configured with higher layer parameter srs-TPC-PDCCH-Group set to 'typeA', and given by SRS-CarrierSwitching, without PUSCH/PUCCH transmission, the order of the triggered SRS transmission on the serving cells follow the order of the serving cells in the indicated set of serving cells configured by higher layers, where the UE in each serving cell transmits the configured one or two SRS resource set(s) with higher layer parameter SRS-SetUse set to 'antenna switching' and higher layer parameter resourceType in SRS-ResourceSet set to 'aperiodic'.

For an aperiodic SRS triggered in DCI format 2_3 and if the UE is configured with higher layer parameter srs-TPC-PDCCH-Group (with TPC referring to Transmitter Power Control) set to 'typeB' without PUSCH/PUCCH transmission, the order of the triggered SRS transmission on the serving cells follow the order of the serving cells with aperiodic SRS triggered in the DCI, and the UE in each serving cell transmits the configured one or two SRS resource set(s) with higher layer parameter SRS-SetUse set to 'antenna switching' and higher layer parameter resourceType in SRS-ResourceSet set to 'aperiodic'.

The UE may be configured with SRS resource(s) on a carrier c1 with slot formats comprised of DL and UL symbols and not configured for PUSCH/PUCCH transmission. For carrier c1, the UE is configured with higher layer parameter srs-SwitchFromServCellIndex and srs-SwitchFromCarrier the switching from carrier c2 which is configured for PUSCH/PUCCH transmission. During SRS transmission on carrier c1 (including any interruption due to uplink or downlink RF retuning time as defined by higher layer parameters rf-RetuningTimeUL and rf-RetuningTimeDL), the UE temporarily suspends the uplink transmission on carrier c2.

If the UE is not configured for PUSCH/PUCCH transmission on carrier c1 with slot formats comprised of DL and UL symbols, and if the UE is not capable of simultaneous reception and transmission on carrier c1 and serving cell c2, the UE is not expected to be configured or indicated with SRS resource(s) such that SRS transmission on carrier c1 (including any interruption due to uplink or downlink RF retuning time as defined by higher layer parameters rf-RetuningTimeUL and rf-RetuningTimeDL) would collide with the REs corresponding to the SS/PBCH blocks configured for the UE or the slots belonging to a control resource set indicated by [SystemInformationBlockType0] or [SystemInformationBlockType1] on serving cell c2.

For n-th (n ≥ 1) aperiodic SRS transmission on a cell c, upon detection of a positive SRS request on a grant, the UE is to commence this SRS transmission on the configured symbol and slot provided

- it is no earlier than the summation of
- the maximum time duration between the two durations spanned by N OFDM symbols of the numerology of cell c and the cell carrying the grant respectively, and

- the UL or DL RF retuning time as defined by higher layer parameters rf-RetuningTimeUL and rf-RetuningTimeDL,
- it does not collide with any previous SRS transmissions, or interruption due to UL or DL RF retuning time.

otherwise, n-th SRS transmission is dropped, where N is the reported capability as the minimum time interval in unit of symbols, between the DCI triggering and aperiodic SRS transmission.

In case of inter-band carrier aggregation, the UE may simultaneously transmit SRS and PUCCH/PUSCH across component carriers in different bands subject to the UE's capability.

In case of inter-band carrier aggregation, the UE may simultaneously transmit PRACH and SRS/PUCCH/PUSCH across component carriers in different bands subject to UE's capability.

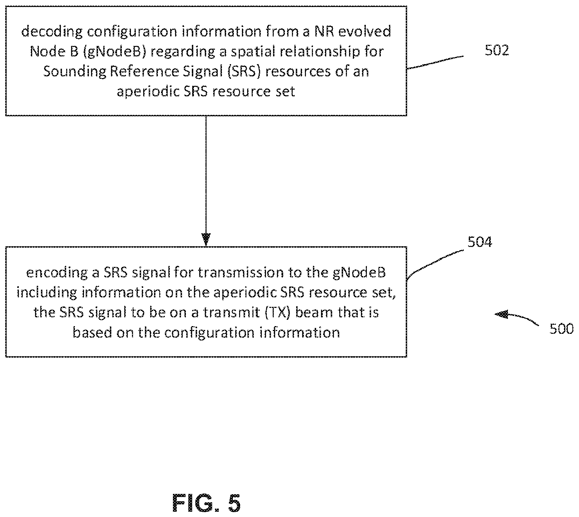

Referring to Fig. 5, a process 500 according to one embodiment includes at operation 502, encoding a SRS signal for transmission to the gNodeB including information on the aperiodic SRS resource set, the SRS signal to be on a transmit (TX) beam that is based on the configuration information; and at operation 504, encoding a SRS signal for transmission to the gNodeB including information on the aperiodic SRS resource set, the SRS signal to be on a transmit (TX) beam that is based on the configuration information.

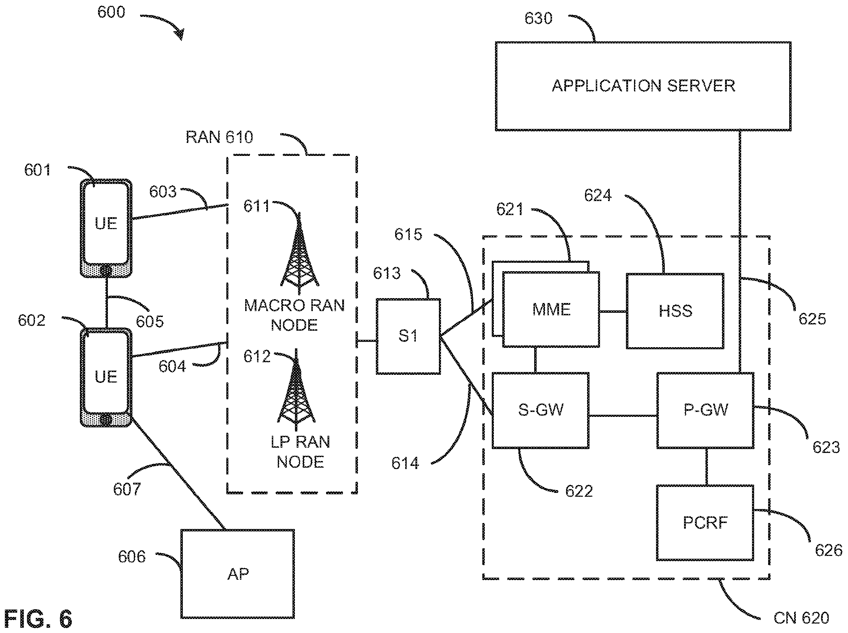

Fig. 6 illustrates an architecture of a system 600 of a network according to some embodiments. The system 600 is shown to include a user equipment (UE) 601 and a UE 602. The UEs 601 and 602 are illustrated as smartphones (e.g., handheld touchscreen mobile computing devices connectable to one or more cellular networks) but may also comprise any mobile or non-mobile computing device.

The UEs 601 and 602 may be configured to connect, e.g., communicatively couple, with a radio access network (RAN) 610. The UEs 601 and 602 utilize connections 603 and 604, respectively, each of which comprises a physical communications interface or layer (discussed in further detail below); in this example, the connections 603 and 604 are illustrated as an air interface to enable communicative coupling and may be consistent with cellular communications protocols.

In this embodiment, the UEs 601 and 602 may further directly exchange communication data via a ProSe interface 605. The ProSe interface 605 may alternatively be referred to as a sidelink interface comprising one or more logical channels, including but not limited to a Physical Sidelink Control Channel (PSCCH), a Physical Sidelink Shared Channel (PSSCH), a Physical Sidelink Discovery Channel (PSDCH), and a Physical Sidelink Broadcast Channel (PSBCH).

The UE 602 is shown to be configured to access an access point (AP) 606 via connection 607. The connection 607 may comprise a local wireless connection, such as a connection consistent with any IEEE 802.11 protocol, wherein the AP 606 would comprise a wireless fidelity (WiFi®) router. In this example, the AP 606 is shown to be connected to the Internet without connecting to the core network of the wireless system (described in further detail below).

The RAN 610 may include one or more access nodes that enable the connections 603 and 604. These access nodes (ANs) may be referred to as base stations (BSs), NodeBs, evolved NodeBs (eNBs), next Generation or New Radio evolved NodeBs (gNodeB), RAN nodes, and so forth, and may comprise ground stations (e.g., terrestrial access points) or satellite stations providing coverage within a geographic area (e.g., a cell). The RAN 610 may include one or more RAN nodes for providing macrocells, e.g., macro RAN node 611, and one or more RAN nodes for providing femtocells or picocells (e.g., cells having smaller coverage areas, smaller user capacity, or higher bandwidth compared to macrocells), e.g., low power (LP) RAN node 612.

According to some embodiments, the UEs 601 and 602 may be configured to communicate using Orthogonal Frequency-Division Multiplexing (OFDM) communication signals with each other or with any of the RAN nodes 611 and 612 over a multicarrier communication channel in accordance various communication techniques, such as, but not limited to, an Orthogonal Frequency-Division Multiple Access (OFDMA) communication technique (e.g., for downlink communications) or a Single Carrier Frequency Division Multiple Access (SC-FDMA) communication technique (e.g., for uplink and ProSe or sidelink communications), although the scope of the embodiments is not limited in this respect. The OFDM signals may comprise a plurality of orthogonal subcarriers.

The RAN 610 is shown to be communicatively coupled to a core network (CN) 620 - via an S1 interface 613. In embodiments, the CN 620 may be an evolved packet core (EPC) network, a NextGen Packet Core (NPC) network, or some other type of CN. In this embodiment the S1 interface 613 is split into two parts: the S1-U interface 614, which carries traffic data between the RAN nodes 611 and 612 and the serving gateway (S-GW) 622, and the S1-mobility management entity (MME) interface 615, which is a signalling interface between the RAN nodes 611 and 612 and MMEs 621.

The CN 620 includes network elements. The term "network element" may describe a physical or virtualized equipment used to provide wired or wireless communication network services. In this embodiment, the CN 620 comprises, as network elements, the MMEs 621, the S-GW 622, the Packet Data Network (PDN) Gateway (P-GW) 623, and a home subscriber server (HSS) 624. The MMEs 621 may be similar in function to the control plane of legacy Serving General Packet Radio Service (GPRS) Support Nodes (SGSN).

The components of Fig. 6, such as the UEs and gNodeB's of Fig. 6, may be used in any of the embodiments described herein.

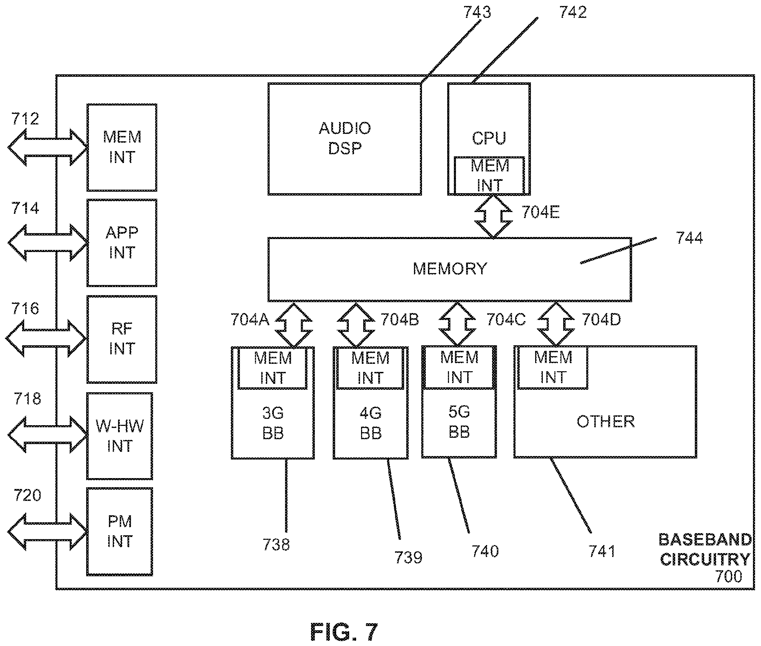

Fig. 7 illustrates example interfaces of baseband circuitry according to various embodiments. The baseband circuitry 700 may be included in a UE or gNodeB, for example, in UE or gNodeB of Fig. 6, and may comprise processors 738-742 and a memory 744 utilized by said processors. Each of the processors 738-732 may include a memory interface, 704A-704E, respectively, to send/receive data to/from the memory 744. Baseband circuitry 700 may also include an audio digital signal processor (Audio DSP) 743.

The baseband circuitry 700 may further include one or more interfaces to communicatively couple to other circuitries/devices, such as a memory interface 712 (e.g., an interface to send/receive data to/from memory external to the baseband circuitry 700), an application circuitry interface 714 (e.g., an interface to send/receive data to/from an application circuitry), an RF circuitry interface 716 (e.g., an interface to send/receive data to/from an RF circuitry), a wireless hardware connectivity interface 718 (e.g., an interface to send/receive data to/from Near Field Communication (NFC) components, Bluetooth® components (e.g., Bluetooth® Low Energy), Wi-Fi® components, and other communication components), and a power management interface 720 (e.g., an interface to send/receive power or control signals to/from a power management integrated circuit (PMIC).

The foregoing description of one or more implementations provides illustration and description, but is not intended to be exhaustive or to limit the scope of embodiments to the precise form disclosed.

## Claims

**1.** A device of a New Radio, NR, User Equipment, UE, (601) the device including a Radio Frequency, RF, interface (716), and processing circuitry (742) coupled to the RF interface (716), the processing circuitry (742) configured to:

decode configuration information from a NR evolved Node B, gNodeB, regarding a spatial relationship for Sounding Reference Signal, SRS, resources of an aperiodic SRS resource set; and

encode a SRS signal for transmission to the gNodeB including information on the aperiodic SRS resource set, the SRS signal to be on a transmit, TX, beam that is based on the configuration information, wherein the aperiodic SRS resource set is for a non-codebook based transmission, and a minimal scheduling offset between a last symbol of a scheduling downlink control information, DCI, and a first symbol of the SRS signal is equal to a scheduling offset M2 if an Channel State Information, CSI, Reference Signal, CSI-RS, is configured for the UE, and is equal to a scheduling offset M1 if the CSI-RS is not configured for the UE, wherein M2 is larger than M1.

**2.** A device (601) of a New Radio, NR, User Equipment, UE, the device including a Radio Frequency, RF, interface (716), and processing circuitry (742) coupled to the RF interface (716), the processing circuitry (742) configured to:

decode configuration information from a NR evolved Node B, gNodeB, regarding a spatial relationship for Sounding Reference Signal, SRS, resources of an aperiodic SRS resource set; and

encode a SRS signal for transmission to the gNodeB including information on the aperiodic SRS resource set, the SRS signal to be on a transmit, TX, beam that is based on the configuration information, wherein the aperiodic SRS resource set is for beam management, and wherein a minimal scheduling offset between a last symbol of a downlink control information, DCI, scheduling the SRS signal and a first symbol of the SRS signal is equal to a scheduling offset M1 if spatial relationship information is configured for the UE, and is equal to a scheduling offset M2 if the spatial relationship information is not configured for the UE, wherein M1 is smaller than M2.

**3.** The device of claim 1 or claim 2, wherein the processing circuitry is to decode a TX beam update signal from the gNodeB including information to update a TX beam for a physical uplink control channel, PUCCH, or a SRS, PUCCH/SRS, from the UE to the gNodeB, the TX beam update signal including an indicated Synchronization Signal Block, SSB,/Channel State Information Reference Signal, CSI-RS/SRS, the signal further being associated with one instance of a SSB/CSI-RS/SRS signal from the UE to the gNodeB, and wherein the TX beam update signal is associated with one of:

a latest time instance k symbols before each transmission of the PUCCH/SRS;
a latest time instance k symbols before a first transmission of PUCCH/SRS after the UE is reconfigured to update the Tx beam based on the signal;
an instance of a SSB/CSI-RS/SRS signal k symbols before the UE receives the signal; or
an instance of a SSB/CSI-RS/SRS signal k symbols before the UE applies the update.

4. The device of claim 1 or claim 2, wherein if the UE is enabled for a phase-tracking reference signal, PT-RS, processing, the processing circuitry is to expect a PT-RS port index to be configured for at least one of non-codebook SRS signals, or one or more indicated SRS resources in a set configured for non-codebook.

5. The device of claim 1 or claim 2, wherein the processing circuitry is to encode for transmission a UE capability signal including information on a maximum number of SRS resource sets for beam management supported by the UE for at least one time domain behavior of the UE, wherein the at least one time domain behavior corresponds to at least one of aperiodic SRS resource sets, semi-persistent SRS resource sets or periodic SRS resource sets.

6. The device of claim 1 or claim 2, wherein:

   if the UE is configured with a higher layer parameter tci-PresentInDCI set at "enabled" for a control resource set, CORESET, scheduling a physical downlink shared channel, PDSCH, where "TCI" refers to Transmission Configuration Indication and "DCI" refers to downlink control information, the processing circuitry is to decode a TCI field in a DCI format 1_1 of a physical downlink control channel, PDCCH, transmitted on the CORESET to determine a TCI state of the PDSCH; and
   if the UE is not configured with a higher layer parameter tci-PresentInDCI, or if a PDSCH is scheduled by a DCI format 1_0 for determining a PDSCH antenna port quasi co-location, the processing circuitry is to determine a TCI state for a PDSCH scheduled by the DCI format 1_0 to be identical to a TCI state applied for a CORESET used for a PDCCH carrying the DCI format 1_0.

7. The device of claim 1 or claim 2, wherein the processing circuitry is to encode a beam failure recovery request signal in one of a physical random access channel, PRACH, or a physical uplink control channel, PUCCH, for transmission to the gNodeB, the beam failure recovery request signal being based on radio link quality measurements on a serving cell, the measurements based on a configuration of the UE for the serving cell with at least one of:

   a set $\bar{q}_0$ of periodic Channel State Information Reference Signal, CSI-RS, resource configuration indexes for configuration of the UE by higher layer parameter "Beam-Failure-Detection-RS-ResourceConfig;" or
   a set $\bar{q}_1$ of at least one of CSI-RS resource configuration indexes or Synchronization Signal/Physical Broadcast Channel, SS/PBCH, block indexes for configuration of the UE by higher layer parameter "candidate-Beam-RS-List."

8. The device of any one of claims 1-7, further including a front end module coupled to the RF interface, and one or more antennas coupled to the front end module.

9. A method (500) to be performed at a device of a New Radio, NR, User Equipment, UE, (601) the method (500) including:

   decoding (502) configuration information from a NR evolved Node B, gNodeB, regarding a spatial relationship for Sounding Reference Signal, SRS, resources of an aperiodic SRS resource set; and
   encoding (504) a SRS signal for transmission to the gNodeB including information on the aperiodic SRS resource set, the SRS signal to be on a transmit, TX, beam that is based on the configuration information,
   wherein the aperiodic SRS resource set is for a non-codebook based transmission, and wherein a minimal scheduling offset between a last symbol of a scheduling downlink control information, DCI, and a first symbol of the SRS signal is equal to a scheduling offset M2 if an Channel State Information, CSI, Reference Signal, CSI-RS, is configured for the UE, and is equal to a scheduling offset M1 if the CSI-RS is not configured for the UE, wherein M2 is larger than M1.

10. A method (500) to be performed at a device of a New Radio, NR, User Equipment, UE, (601) the method including:

   decoding (502) configuration information from a NR evolved Node B, gNodeB, regarding a spatial relationship for Sounding Reference Signal, SRS, resources of an aperiodic SRS resource set; and
   encoding (504) a SRS signal for transmission to the gNodeB including information on the aperiodic SRS resource set, the SRS signal to be on a transmit, TX, beam that is based on the configuration information,
   wherein the aperiodic SRS resource set is for beam management, and wherein a minimal scheduling offset between a last symbol of a downlink control information, DCI, scheduling the SRS signal and a first symbol of the SRS signal is equal to a scheduling offset M1 if spatial relationship information is configured for the UE, and is equal to a scheduling offset M2 if the spatial relationship information is not configured for the UE, wherein M1 is smaller than M2.

11. The method of claim 9 or claim 10, wherein the method further includes encoding for transmission to the gNodeB a physical uplink shared channel, PUSCH, wherein a spatial domain transmission filter of the PUSCH corresponds to a spatial domain transmission filter of an indicated SRS resource indicated to the UE by the gNodeB regardless of whether a SRS signal corresponding to the indicated SRS resource is transmitted by the UE.

12. A machine-readable medium including code which, when executed, is to cause a machine to perform the method of any one of claims 9-11.

**Patentansprüche**

1. Vorrichtung einer New Radio-, NR-, Benutzerausrüstung, UE, (601), wobei die Vorrichtung eine Hochfrequenz-, HF-, Schnittstelle (716) und eine Verarbeitungsschaltung (742) beinhaltet, die mit der HF-Schnittstelle (716) gekoppelt ist, wobei die Verarbeitungsschaltung (742) dazu konfiguriert ist:

   Konfigurationsinformationen von einem NR evolved Node B, gNodeB, bezüglich einer räumlichen Beziehung für Sondierungsreferenzsignal-, SRS-, Ressourcen eines aperiodischen SRS-Ressourcensatzes zu decodieren; und
   ein SRS-Signal für die Übertragung zum gNodeB, das Informationen über den aperiodischen SRS-Ressourcensatz beinhaltet, zu codieren, wobei sich das SRS-Signal auf einem Übertragungs-, TX-, Strahl befinden soll, der auf den Konfigurationsinformationen basiert,
   wobei der aperiodische SRS-Ressourcensatz einer nichtcodebuchbasierten Übertragung dient, und ein minimaler Planungsversatz zwischen einem letzten Symbol von Planungs-Downlink-Steuerinformationen, DCI, und einem ersten Symbol des SRS-Signals gleich einem Planungsversatz M2 ist, wenn ein Kanalzustandsinformation-, CSI-, Referenzsignal, CSI-RS, für die UE konfiguriert ist, und gleich einem Planungsversatz M1 ist, wenn die CSI-RS nicht für die UE konfiguriert ist, wobei M2 größer als M1 ist.

2. Vorrichtung (601) einer New Radio-, NR-, Benutzerausrüstung, UE, wobei die Vorrichtung eine Hochfrequenz-, HF-, Schnittstelle (716) und eine Verarbeitungsschaltung (742) beinhaltet, die mit der HF-Schnittstelle (716) gekoppelt ist, wobei die Verarbeitungsschaltung (742) dazu konfiguriert ist:

   Konfigurationsinformationen von einem NR evolved Node B, gNodeB, bezüglich einer räumlichen Beziehung für Sondierungsreferenzsignal-, SRS-, Ressourcen eines aperiodischen SRS-Ressourcensatzes zu decodieren; und
   Codieren eines SRS-Signals für die Übertragung zum gNodeB, das Informationen über den aperiodischen SRS-Ressourcensatz beinhaltet, wobei das SRS-Signal auf einem Übertragungs-, TX-, Strahl sein soll, der auf den Konfigurationsinformationen basiert,
   wobei der aperiodische SRS-Ressourcensatz einem Strahlmanagement dient, und wobei ein minimaler Planungsversatz zwischen einem letzten Symbol von Downlink-Steuerinformationen, DCI, die das SRS-Signal plant, und einem ersten Symbol des SRS-Signals gleich einem Planungsversatz M1 ist, wenn räumliche Beziehungsinformationen für die UE konfiguriert sind, und gleich einem Planungsversatz M2 ist, wenn die räumlichen Beziehungsinformationen nicht für die UE konfiguriert sind, wobei M1 kleiner als M2 ist.

3. Vorrichtung nach Anspruch 1 oder Anspruch 2, wobei die Verarbeitungsschaltung dazu dient, ein TX-Strahl-Aktualisierungssignal vom gNodeB zu decodieren, das Informationen beinhaltet, um einen TX-Strahl für einen physikalischen Uplink-Steuerkanal, PUCCH, oder einen SRS, PUCCH/SRS, vom UE zum gNodeB zu aktualisieren, wobei das TX-Strahl-Aktualisierungssignal ein angegebenes Synchronisationssignalblock, SSB, / Kanalzustandsinformations-Referenzsignal, CSI-RS/SRS, beinhaltet, wobei das Signal ferner einer Instanz eines SSB/CSI-RS/SRS-Signals von dem UE zu dem gNodeB zugeordnet ist, und wobei das TX-Strahl-Aktualisierungssignal einem der folgenden zugeordnet ist:

   eine letzte Zeitinstanz k Symbole vor jeder Übertragung des PUCCH/SRS;
   eine letzte Zeitinstanz k Symbole vor einer ersten Übertragung von PUCCH/SRS, nachdem die UE rekonfiguriert ist, um den Tx-Strahl basierend auf dem Signal zu aktualisieren;
   eine Instanz eines SSB/CSI-RS/SRS-Signals k Symbole, bevor die UE das Signal empfängt; oder
   eine Instanz eines SSB/CSI-RS/SRS-Signals k Symbole, bevor die UE die Aktualisierung anwendet.

4. Vorrichtung nach Anspruch 1 oder Anspruch 2, wobei, wenn die UE für die Verarbeitung eines Phasennachführsignals, PT-RS, aktiviert ist, die Verarbeitungsschaltung erwarten soll, dass ein PT-RS-Port-Index für mindestens eines von Nicht-Codebuch-SRS-Signalen oder eine oder mehrere angegebene SRS-Ressourcen in einem Satz, der für Nicht-Codebuch konfiguriert ist, konfiguriert werden soll.

5. Vorrichtung nach Anspruch 1 oder Anspruch 2, wobei die Verarbeitungsschaltung dazu dient, für die Übertragung ein UE-Fähigkeitssignal zu codieren, das Informationen über eine maximale Anzahl von SRS-Ressourcensätzen für das durch die UE unterstützte Strahlmanagement für mindestens ein Zeitbereichsverhalten der UE beinhaltet, wobei das mindestens eine Zeitbereichsverhalten mindestens einem von aperiodischen SRS-Ressourcensätzen, semipersistenten SRS-Ressourcensätzen oder periodischen SRS-Ressourcensätzen entspricht.

6. Vorrichtung nach Anspruch 1 oder Anspruch 2, wobei:

   wenn die UE mit einem Parameter der höheren Schicht tci-PresentInDCI konfiguriert ist, der auf "enabled" für einen Steuerressourcensatz, CORESET, gesetzt ist, der einen physikalischen gemeinsam genutzten Downlink-Kanal, PDSCH, einplant, wobei "TCI" sich auf Transmission Configuration Indication und "DCI" sich auf Downlink-Steuerinformationen bezieht, die Verarbeitungsschaltung dazu dient, ein TCI-Feld in einem DCI-Format 1_1 eines physikalischen Downlink-Steuerkanals, PDCCH, der auf dem CORESET übertragen wird, zu decodieren, um einen TCI-Zustand des PDSCH zu bestimmen; und
   wenn die UE nicht mit einem höheren Schichtparameter tci-PresentInDCI konfiguriert ist, oder wenn ein PDSCH durch ein DCI-Format 1_0 zum Bestimmen einer PDSCH-Antennenport-Quasi-Ko-Lokation geplant wird, soll die Verarbeitungsschaltung einen TCI-Zustand für ein durch das DCI-Format 1_0 geplantes PDSCH so bestimmen, dass er mit einem TCI-Zustand identisch ist, der für ein CORESET angewendet wird, das für ein PDCCH verwendet wird, das das DCI-Format 1_0 trägt.

7. Vorrichtung nach Anspruch 1 oder Anspruch 2, wobei die Verarbeitungsschaltung dazu dient, ein Strahlausfall-Wiederherstellungsanforderungssignal in einem physikalischen Kanal mit wahlfreiem Zugriff, PRACH, oder einem physikalischen Uplink-Steuerkanal, PUCCH, zur Übertragung an den gNodeB zu codieren, wobei das Strahlausfall-Wiederherstellungsanforderungssignal auf Funklink-Qualitätsmessungen in einer bedienenden Zelle basiert, wobei die Messungen auf einer Konfiguration der UE für die bedienende Zelle mit mindestens einem der Folgenden basiert:

   einem Satz $\bar{q}_0$ periodischer CSI-RS-Ressourcenkonfigurationsindizes (Channel State Information Reference Signal) zur Konfiguration der UE durch den Parameter "Beam-Failure-Detection-RS-ResourceConfig" auf höherer Ebene; oder
   einem Satz $\bar{q}_1$ von mindestens einem von CSI-RS-Ressourcenkonfigurationsindizes oder Synchronisationssignal/Physical Broadcast Channel, SS/PBCH, Blockindizes zur Konfiguration der UE durch den Parameter "candidate-Beam-RS-List" auf höherer Ebene.

8. Vorrichtung nach einem der Ansprüche 1-7, die ferner ein mit der HF-Schnittstelle gekoppeltes Front-End-Modul und eine oder mehrere mit dem Front-End-Modul gekoppelte Antennen beinhaltet.

9. Verfahren (500), das an einer Vorrichtung einer New Radio-, NR-, Benutzerausrüstung, UE, (601) durchgeführt wird, wobei das Verfahren (500) beinhaltet:

   Decodieren (502) von Konfigurationsinformationen von einem NR evolved Node B, gNodeB, bezüglich einer räumlichen Beziehung für Sondierungsreferenzsignal-, SRS-, Ressourcen eines aperiodischen SRS-Ressourcensatzes; und
   Codieren (504) eines SRS-Signals zur Übertragung an das gNodeB, das Informationen über den aperiodischen SRS-Ressourcensatz beinhaltet, wobei sich das SRS-Signal auf einem Übertragungs-, TX-, Strahl befinden soll, der auf den Konfigurationsinformationen basiert, wobei der aperiodische SRS-Ressourcensatz einer nichtcodebuchbasierte Übertragung dient und wobei ein minimaler Planungsversatz zwischen einem letzten Symbol von Planungs-Downlink-Steuerinformationen, DCI, und einem ersten Symbol des SRS-Signals gleich einem Planungsversatz M2 ist, wenn ein Kanalzustandsinformation-, CSI-, Referenzsignal, CSI-RS, für die UE konfiguriert ist, und gleich einem Planungsversatz M1 ist, wenn die CSI-RS nicht für die UE konfiguriert ist, wobei M2 größer als M1 ist.

10. Verfahren (500), das an einer Vorrichtung einer New Radio-, NR-, Benutzerausrüstung, UE, (601) durchgeführt wird, wobei das Verfahren beinhaltet:

Decodieren (502) von Konfigurationsinformationen von einem NR evolved Node B, gNodeB, bezüglich einer räumlichen Beziehung für Sondierungsreferenzsignal-, SRS-, Ressourcen eines aperiodischen SRS-Ressourcensatzes; und

Codieren (504) eines SRS-Signals zur Übertragung an das gNodeB, das Informationen über den aperiodischen SRS-Ressourcensatz beinhaltet, wobei sich das SRS-Signal auf einem Übertragungs-, TX-, Strahl befinden soll, der auf den Konfigurationsinformationen basiert,

wobei der aperiodische SRS-Ressourcensatz für das Strahlmanagement bestimmt ist, und wobei ein minimaler Planungsversatz zwischen einem letzten Symbol von Downlink-Steuerinformationen, DCI, die das SRS-Signal plant, und einem ersten Symbol des SRS-Signals gleich einem Planungsversatz M1 ist, wenn Raumbeziehungsinformationen für die UE konfiguriert sind, und gleich einem Planungsversatz M2 ist, wenn die Raumbeziehungsinformationen nicht für die UE konfiguriert sind, wobei M1 kleiner als M2 ist.

11. Verfahren nach Anspruch 9 oder Anspruch 10, wobei das Verfahren ferner das Codieren eines gemeinsam genutzten physikalischen Uplink-Kanals, PUSCH, zur Übertragung an das gNodeB beinhaltet, wobei ein räumliches Domänen-Übertragungsfilter des PUSCH einem räumlichen Domänen-Übertragungsfilter einer angegebenen SRS-Ressource entspricht, die der UE durch das gNodeB angegeben wird, unabhängig davon, ob ein SRS-Signal, das der angegebenen SRS-Ressource entspricht, von der UE übertragen wird.

12. Maschinenlesbares Medium, das Code beinhaltet, der, wenn er ausgeführt wird, eine Maschine veranlassen soll, das Verfahren nach einem der Ansprüche 9-11 durchführt.

**Revendications**

1. Dispositif d'un équipement utilisateur, UE, New Radio, NR, (601) le dispositif comprenant une interface radiofréquence, RF, (716), et des circuits de traitement (742) couplés à l'interface RF (716), les circuits de traitement (742) étant configurés pour :

décoder des informations de configuration provenant d'un noeud B évolué NR, gNodeB, concernant une relation spatiale pour les ressources de signal de référence de sondage, SRS, d'un ensemble de ressources SRS apériodiques ; et

coder un signal SRS pour la transmission au gNodeB comprenant des informations sur l'ensemble de ressources SRS apériodiques, le signal SRS devant être sur un faisceau d'émission, TX, qui est basé sur les informations de configuration,

dans lequel l'ensemble de ressources SRS apériodiques est destiné à une transmission non basée sur un codebook, et un décalage d'ordonnancement minimal entre un dernier symbole d'une information de contrôle de liaison descendante d'ordonnancement, DCI, et un premier symbole du signal SRS est égal à un décalage d'ordonnancement M2 si un signal de référence d'information d'état de canal, CSI, CSI-RS, est configuré pour l'UE, et est égal à un décalage d'ordonnancement M1 si le CSI-RS n'est pas configuré pour l'UE, où M2 est plus grand que M1.

2. Dispositif (601) d'un équipement utilisateur, UE, New Radio, NR, le dispositif comprenant une interface radiofréquence, RF, (716), et des circuits de traitement (742) couplés à l'interface RF (716), les circuits de traitement (742) étant configurés pour :

décoder des informations de configuration provenant d'un noeud B évolué NR, gNodeB, concernant une relation spatiale pour les ressources de signal de référence de sondage, SRS, d'un ensemble de ressources SRS apériodiques ; et

coder un signal SRS pour la transmission au gNodeB comprenant des informations sur l'ensemble de ressources SRS apériodiques, le signal SRS devant être sur un faisceau d'émission, TX, basé sur les informations de configuration,

dans lequel l'ensemble de ressources SRS apériodiques est destiné à la gestion du faisceau, et dans lequel un décalage d'ordonnancement minimal entre un dernier symbole d'une information de contrôle de liaison descendante, DCI, ordonnançant le signal SRS et un premier symbole du signal SRS est égal à un décalage d'ordonnancement M1 si des informations de relation spatiale sont configurées pour l'UE, et est égal à un décalage d'ordonnancement M2 si les informations de relation spatiale ne sont pas configurées pour l'UE, où M1 est inférieur à M2.

**3.** Dispositif selon la revendication 1 ou la revendication 2, dans lequel les circuits de traitement sont destinés à décoder un signal de mise à jour du faisceau TX provenant du gNodeB, comprenant des informations pour mettre à jour un faisceau TX pour un canal de contrôle de liaison montante physique, PUCCH, ou un SRS, PUCCH/SRS, de l'UE vers le gNodeB, le signal de mise à jour du faisceau TX comprenant un signal de référence d'informations d'état de canal/de bloc de signal de synchronisation, SSB, CSI-RS/SRS, le signal étant en outre associé à une instance d'un signal SSB/CSI-RS/SRS de l'UE vers le gNodeB, et où le signal de mise à jour de faisceau TX est associé à l'un des éléments suivants :

la dernière instance temporelle k symboles avant chaque transmission du PUCCH/SRS ;
la dernière instance temporelle k symboles avant une première transmission du PUCCH/SRS après que l'UE a été reconfiguré pour mettre à jour le faisceau TX sur la base du signal ;
l'instance d'un signal SSB/CSI-RS/SRS k symboles avant que l'UE ne reçoive le signal ; ou
l'instance d'un signal SSB/CSI-RS/SRS k symboles avant que l'UE n'applique la mise à jour.

**4.** Dispositif selon la revendication 1 ou la revendication 2, dans lequel si l'UE est activé pour le traitement d'un signal de référence de suivi de phase, PT-RS, les circuits de traitement doivent s'attendre à ce qu'un index de port PT-RS soit configuré pour au moins l'un des signaux SRS non codés, ou une ou plusieurs ressources SRS indiquées dans un ensemble configuré sans codebook.

**5.** Dispositif selon la revendication 1 ou la revendication 2, dans lequel les circuits de traitement sont destinés à coder pour la transmission un signal de capacité d'UE comprenant des informations sur un nombre maximal d'ensembles de ressources SRS pour la gestion de faisceau prise en charge par l'UE pour au moins un comportement de domaine temporel de l'UE, où l'au moins un comportement de domaine temporel correspond à au moins un des ensembles de ressources SRS apériodiques, des ensembles de ressources SRS semi-persistants ou des ensembles de ressources SRS périodiques.

**6.** Dispositif selon la revendication 1 ou la revendication 2, dans lequel :

si l'UE est configuré avec un paramètre de couche supérieure tci-PresentInDCI réglé sur « enabled » pour un ensemble de ressources de contrôle, CORESET, programmant un canal partagé de liaison descendante physique, PDSCH, où « TCI » désigne une indication de configuration de transmission et « DCI » désigne des informations de contrôle de liaison descendante, les circuits de traitement doivent décoder un champ TCI dans un format DCI 1_1 d'un canal de contrôle de liaison descendante physique, PDCCH, transmis sur le CORESET afin de déterminer un état TCI du PDSCH ; et
si l'UE n'est pas configuré avec un paramètre de couche supérieure tci-PresentInDCI, ou si un PDSCH est programmé par un format DCI 1_0 pour déterminer une quasi-cohabitation de port d'antenne PDSCH, les circuits de traitement doivent déterminer un état TCI pour un PDSCH programmé par le format DCI 1_0 comme étant identique à un état TCI appliqué pour un CORESET utilisé pour un PDCCH transportant le format DCI 1_0.

**7.** Dispositif selon la revendication 1 ou la revendication 2, dans lequel les circuits de traitement doivent coder un signal de demande de récupération en cas d'échec du faisceau dans un canal physique d'accès aléatoire, PRACH, ou un canal physique de commande de liaison montante, PUCCH, pour transmission au gNodeB, le signal de demande de récupération en cas d'échec du faisceau étant basé sur des mesures de la qualité de la liaison radio sur une cellule de desserte, les mesures étant basées sur une configuration de l'UE pour la cellule de desserte avec au moins l'un des éléments suivants :

un ensemble $\overline{q}_0$ d'index de configuration des ressources CSI-RS (Channel State Information Reference Signal) périodiques pour la configuration de l'UE par un paramètre de couche supérieure « Beam-Failure-Detection-RS-ResourceConfig » ; ou
un ensemble $\overline{q}_1$ d'au moins un des index de configuration des ressources CSI-RS ou des index de blocs de signaux de synchronisation/canal de diffusion physique, SS/PBCH, pour la configuration de l'UE par le paramètre de couche supérieure « candidate-Beam-RS-List ».

**8.** Dispositif selon l'une quelconque des revendications 1 à 7, comprenant en outre un module frontal couplé à l'interface RF et une ou plusieurs antennes couplées au module frontal.

9.  Procédé (500) à exécuter sur un dispositif d'un équipement utilisateur, UE, New Radio, NR, (601) le procédé (500) comprenant les étapes suivantes :

décoder (502) des informations de configuration provenant d'un noeud B évolué NR, gNodeB, concernant une relation spatiale pour les ressources de signal de référence de sondage, SRS, d'un ensemble de ressources SRS apériodiques ; et
coder (504) un signal SRS pour la transmission au gNodeB comprenant des informations sur l'ensemble de ressources SRS apériodiques, le signal SRS devant être sur un faisceau d'émission, TX, basé sur les informations de configuration,
dans lequel l'ensemble de ressources SRS apériodiques est destiné à une transmission non basée sur un codebook, et dans lequel un décalage d'ordonnancement minimal entre un dernier symbole d'une information de contrôle de liaison descendante d'ordonnancement, DCI, et un premier symbole du signal SRS est égal à un décalage d'ordonnancement M2 si un signal de référence d'information d'état de canal, CSI, CSI-RS, est configuré pour l'UE, et est égal à un décalage d'ordonnancement M1 si le CSI-RS n'est pas configuré pour l'UE, où M2 est plus grand que M1.

10. Procédé (500) à exécuter sur un dispositif d'un équipement utilisateur, UE, New Radio, NR, (601) le procédé comprenant les étapes suivantes :

décoder (502) des informations de configuration provenant d'un noeud B évolué NR, gNodeB, concernant une relation spatiale pour les ressources de signal de référence de sondage, SRS, d'un ensemble de ressources SRS apériodiques ; et
coder (504) un signal SRS pour la transmission au gNodeB comprenant des informations sur l'ensemble de ressources SRS apériodiques, le signal SRS devant être sur un faisceau d'émission, TX, basé sur les informations de configuration,
dans lequel l'ensemble de ressources SRS apériodiques est destiné à la gestion du faisceau, et dans lequel un décalage d'ordonnancement minimal entre un dernier symbole d'une information de contrôle de liaison descendante, DCI, ordonnançant le signal SRS et un premier symbole du signal SRS est égal à un décalage d'ordonnancement M1 si des informations de relation spatiale sont configurées pour l'UE, et est égal à un décalage d'ordonnancement M2 si les informations de relation spatiale ne sont pas configurées pour l'UE, où M1 est inférieur à M2.

11. Procédé selon la revendication 9 ou la revendication 10, dans lequel le procédé comprend en outre le codage pour la transmission au gNodeB d'un canal physique partagé de liaison montante, PUSCH, dans lequel un filtre de transmission de domaine spatial du PUSCH correspond à un filtre de transmission de domaine spatial d'une ressource SRS indiquée à l'UE par le gNodeB, indépendamment du fait qu'un signal SRS correspondant à la ressource SRS indiquée est transmis par l'UE.

12. Support lisible par une machine comprenant un code qui, lorsqu'il est exécuté, doit amener une machine à exécuter le procédé selon l'une quelconque des revendications 9 à 11.

**FIG. 1**

FIG. 2

FIG. 3

FIG. 4

502

decoding configuration information from a NR evolved Node B (gNodeB) regarding a spatial relationship for Sounding Reference Signal (SRS) resources of an aperiodic SRS resource set

504

encoding a SRS signal for transmission to the gNodeB including information on the aperiodic SRS resource set, the SRS signal to be on a transmit (TX) beam that is based on the configuration information

500

**FIG. 5**

FIG. 6

EP 3 850 776 B1

FIG. 7

**EP 3 850 776 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2018105276 W

- US 62748054

**Non-patent literature cited in the description**

- **ERICSSON.** Feature lead summary 3 on beam measurement and reporting. *3GPP DRAFT; R1-1803417,* vol. RAN WG1 (Athens, Greece
- 3rd Generation Partnership Project; Technical Specification Group Radio Access Network; NR; Physical layer procedures for data (Release 15). *3GPP STANDARD; TECHNICAL SPECIFICATION; 3GPP TS 38.214, 3RD GENERATION PARTNERSHIP PROJECT (3GPP)*

- **ERICSSON ; RAN WG1.** Feature lead summary 1 for beam measurement and reporting. *3GPP DRAFT; R1-1807625,* 21 May 2018, (Busan
- **ZTE.** Maintenance for beam management. *3GPP DRAFT; R1-1808196,* 11 August 2018, vol. RAN WG1 (Gothenburg, Sweden